# EUROPEAN PATENT SPECIFICATION

(11) **EP 3 618 497 B1**
(45) Date of publication and mention of the grant of the patent: **12.10.2022**
(21) Application number: 18790060.0
(22) Date of filing: 21.03.2018
(51) Int. Cl.: H04W 36/00, H04W 88/04

(54) **ELECTRONIC DEVICE AND METHOD EXECUTED BY ELECTRONIC DEVICE**
ELEKTRONISCHE VORRICHTUNG UND DURCH EINE ELEKTRONISCHE VORRICHTUNG AUSGEFÜHRTES VERFAHREN
DISPOSITIF ÉLECTRONIQUE ET PROCÉDÉ EXÉCUTÉ PAR LE DISPOSITIF ÉLECTRONIQUE

(30) Priority: 28.04.2017 CN 201710296496
(43) Date of publication of application: 04.03.2020
(73) Proprietor: Sony Group Corporation, Tokyo 108-0075 (JP)
(72) Inventor: XU, Xiaodong, Beijing 100876 (CN); ZHANG, Shiqing, Beijing 100876 (CN); SUN, Mengying, Beijing 100876 (CN); GUO, Xin, Beijing 100028 (CN); ZHANG, Yi, Beijing 100876 (CN); XIAO, Yunqiu, Beijing 100876 (CN)
(74) Representative: D Young & Co LLP
(86) International application number: PCT/CN2018/079808
(87) International publication number: WO 2018/196513

(56) References cited:
- WO-A1-2017/014716
- CN-A- 102 958 122
- CN-A- 103 686 894
- CN-A- 105 451 282
- CN-A- 105 745 965
- US-A1- 2010 061 339
- US-A1- 2010 260 096
- US-A1- 2012 003 962
- US-A1- 2013 322 325
- HUAWEI ET AL: "Group mobility procedures", 3GPP DRAFT; R2-1703469, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, Washington, USA; 20170403 - 20170407 3 April 2017 (2017-04-03), XP051245324, Retrieved from the Internet: URL:http://www.3gpp.org/ftp/Meetings_3GPP_ SYNC/RAN2/Docs/ [retrieved on 2017-04-03]

## Description

The present application claims priority to Chinese Patent Application No. 201710296496.5, titled "ELECTRONIC DEVICE AND METHOD EXECUTED BY ELECTRONIC DEVICE", filed on April 28, 2017 with the Chinese Patent Office.

### FIELD

Embodiments of the present disclosure generally relate to the field of wireless communication, and in particular to an electronic device. Particularly, the embodiments of the present disclosure relates to a relay device and a remote device in a wireless communication system.

### BACKGROUND

In the further enhanced device to device (FeD2D) wireless system, a remote UE may communicate with a network side device (for example a base station, including but not limited to evolved node B (eNB)) via a relay UE. Specifically, the remote UE communicates with the relay UE via a sidelink or a non-3^{rd} generation partnership project (3GPP) link such as Bluetooth and wireless fidelity (Wifi), and the relay UE may communicate with the network side device via the conventional cellular link.

In such network structure, in a case that quality of the sidelink between the remote UE and the relay UE or the cellular link between the relay UE and the network side device is reduced to a certain degree, the remote UE performs a relay handover process. That is, the relay UE does not provide a relay service for the remote UE. The relay UE may need to change into the remote UE, and communicates with the network side device via another relay user. In the conventional method, it is required for the remote UE or the relay UE to perform the handover process independently, including transmitting connection establishment request to the target handover device and receiving connection establishment response and so on, thereby resulting in great signaling overhead. In addition, the same target handover device may receive multiple connection establishment requests from different devices in a short time period, thereby resulting in signaling collision.

Therefore, it is necessary to provide an improved relay handover solution, to save signaling overhead and reducing a probability of signaling collision. Prior art includes HUAWEI ET AL, "Group mobility procedures", vol. RAN WG2, no. Spokane, Washington, USA; 20170403 - 20170407, (20170403), 3GPP DRAFT; R2-1703469, US 2010/061339 A1 and US 2010/260096 A1.

### SUMMARY

This section provides a general summary of the present disclosure, and is not a comprehensive disclosure of its full scope or all of its features.

An object of the present disclosure is to provide a group-based relay handover scheme, to reduce signaling overhead and reduce a probability of signaling collision.

The present invention is defined by the claims.

With the electronic device and the wireless communication method performed by the electronic device according to the present disclosure, the electronic device can generate a group-based relay handover command, where the handover command includes information on a device member list and a target relay device for each handover group. In this way, devices are grouped based on the handover group, and relay handover can be performed on devices in the same handover group as a whole, thereby reducing signaling overhead and reducing a probability of signaling collision.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure. In the drawings:
Figure 1 shows a schematic diagram of an application scene of the present disclosure;
Figure 2 shows a block diagram of a structure of an electronic device according to an embodiment of the present disclosure;
Figure 3 shows a block diagram of a structure of an electronic device according to another embodiment of the present disclosure;
Figure 4 shows a schematic flowchart of group-based relay handover according to an embodiment of the present disclosure;
Figure 5 shows a signaling flowchart of dividing handover groups according to an embodiment of the present disclosure;
Figure 6 shows a signaling flowchart of grouping handover groups according to an embodiment of the present disclosure;
Figure 7 shows a signaling flowchart of grouping handover groups according to an embodiment of the present disclosure;
Figure 8 shows a signaling flowchart of grouping handover groups according to an embodiment of the present disclosure;
Figure 9 shows a signaling flowchart of grouping handover groups according to an embodiment of the present disclosure;
Figure 10 shows a signaling flowchart of determining a target relay device according to an embodiment of the present disclosure;
Figure 11 shows a signaling flowchart of determining a target relay device according to an embodiment of the present disclosure;
Figure 12 shows a signaling flowchart of determining a target relay device according to an embodiment of the present disclosure;
Figure 13 shows a signaling flowchart of determining a target relay device according to an embodiment of the present disclosure;
Figure 14 shows a signaling flowchart of determining a target relay device according to an embodiment of the present disclosure;
Figure 15 shows a signaling flowchart of determining a target relay device according to an embodiment of the present disclosure;
Figure 16 shows a signaling flowchart of determining a target relay device according to an embodiment of the present disclosure;
Figure 17 shows a signaling flowchart of configuring measurement configuration for a remote device according to an embodiment of the present disclosure;
Figure 18 shows a signaling flowchart of configuring measurement configuration for a remote device according to an embodiment of the present disclosure;
Figure 19 shows a signaling flowchart of generating a group-based relay handover command by a target relay device according to an embodiment of the present disclosure;
Figure 20 shows a signaling flowchart of performing a handover process according to an embodiment of the present disclosure;
Figure 21 shows a signaling flowchart of performing a handover process according to an embodiment of the present disclosure;
Figure 22 shows a signaling flowchart of performing a handover process according to an embodiment of the present disclosure;
Figure 23 shows a signaling flowchart of performing a handover process according to an embodiment of the present disclosure;
Figure 24 shows a signaling flowchart of group-based relay handover according to an embodiment of the present disclosure;
Figure 25 shows a block diagram of a structure of an electronic device according to another embodiment of the present disclosure;
Figure 26 shows a block diagram of a structure of an electronic device according to another embodiment of the present disclosure;
Figure 27 shows a block diagram of a structure of an electronic device according to another embodiment of the present disclosure;
Figure 28 shows a block diagram of a structure of an electronic device according to another embodiment of the present disclosure;
Figure 29 shows a flowchart of a method performed by an electronic device according to an embodiment of the present disclosure;
Figure 30 shows a flowchart of a method performed by an electronic device according to another embodiment of the present disclosure;
Figure 31 shows a flowchart of a method performed by an electronic device according to another embodiment of the present disclosure;
Figure 32 shows a block diagram of a first example of a schematic configuration of an evolved node B (eNB);
Figure 33 shows a block diagram of a second example of the schematic configuration of the eNB;
Figure 34 shows a block diagram of an example of a schematic configuration of a smartphone; and
Figure 35 shows a block diagram of an example of a schematic configuration of an automobile navigation device.

While the present disclosure is susceptible to various modifications and alternative forms, specific embodiments thereof have been shown by way of example in the drawings and are herein described in detail. It should be understood, however, that the description herein of specific embodiments is not intended to limit the present disclosure to the particular forms disclosed, but on the contrary, the intention is to cover all modifications and alternatives falling within the scope of the present disclosure. Note that corresponding reference numerals indicate corresponding parts throughout the several views of the drawings.

### DETAILED DESCRIPTION OF THE EMBODIMENTS

Examples of the present disclosure will now be described more fully with reference to the accompanying drawings. The following description is merely exemplary in nature and is not intended to limit the present disclosure, application, or uses.

Example embodiments are provided such that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

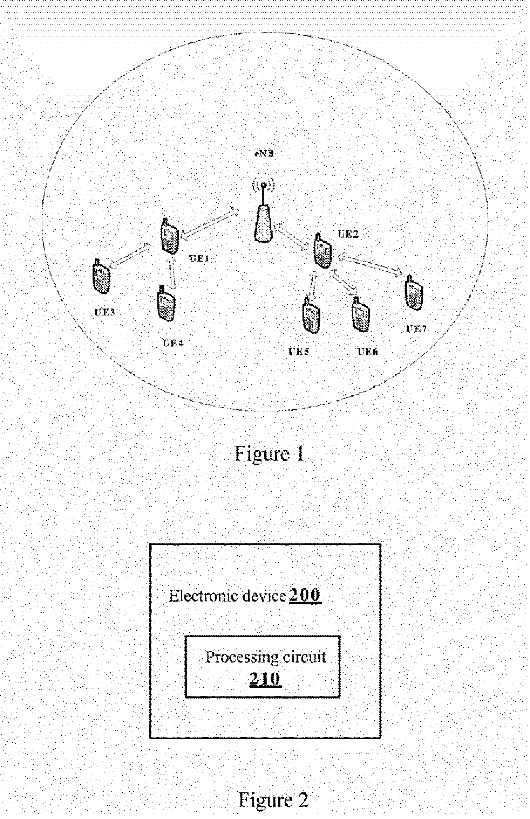

Figure 1 shows an application scene of the present disclosure. As shown in Figure 1, multiple user equipments exist in a coverage of eNB. In which, UE1 and UE2 may function as relay devices, and UE3 to UE7 may function as a remote device. UE3 and UE4 communicate with the eNB via UE1, and UE5 to UE7 communicate with the eNB via UE2. It should be noted that, UE3 to UE7 shown in Figure 1 each are located in the coverage of the eNB; alternatively, if one or more user equipments among UE3 to UE7 are beyond the coverage of the eNB, communication with the eNB can still be performed via UE1 or UE2. In addition, although UE1 to UE7 are indicated by mobile terminals in Figure 1, UE1 to UE7 are not limited to mobile terminals and may be implemented as vehicle-mounted devices and machine type communication (MTC) devices. Particularly, UE3 to UE7 functioning as remote devices may be implemented as wearable devices.

As described above, in a case that link quality of a sidelink between a remote user and a relay user or a cellular link between a relay user and a network side device is reduced to a certain degree, the remote user performs a relay handover process, and the relay user needs to communicate with the network side device via another relay user. For example, in a case that link quality of the sidelink between UE3 and UE1 is reduced to a certain degree, UE3 needs to hand over to another relay device to communicate with the eNB. In a case that link quality of a cellular link between the eNB and UE1 is reduced to a certain degree, UE3 and UE4 need to hand over to another relay device to communicate with the eNB, while UE1 needs to change into a remote device and communicate with the eNB via another relay device. In addition, the relay user may receive high-layer signaling indicating that one or more remote users served by the relay user need to perform a relay handover process or the relay user needs to change into a remote user. Alternatively, the relay user may receive high-layer signaling indicating that remote users served by one or more other relay users need to be handed over to the relay user.

For a scene in which the relay user stops providing services for the remote user, a group-based relay handover scheme is provided according to the present disclosure, to reduce signaling overhead and reduce a probability of signaling collision.

Figure 2 shows a block diagram of a structure of an electronic device 200 according to an embodiment of the present disclosure.

As shown in Figure 2, the electronic device 200 may include a processing circuit 210. It should be noted that the electronic device 200 may include one or more processing circuits 210. Further, the processing circuit 210 may include various discrete functional units to perform different functions and/or operations. It should be noted that the functional units may be physical entities or logical entities, and units with different names may be implemented by the same physical entity.

According to the embodiment of the present disclosure, the processing circuit 210 may generate a group-based relay handover command based on a trigger event. The group-based relay handover command includes information on a device member list and a target relay device for each handover group of one or more handover groups.

That is, the processing circuit 210 may generate the group-based relay handover command, and the command includes information on each of the one or more handover groups, comprising information on a device member list and a target relay device for the handover group. Here, the device member list for the handover group may, for example, include an identifier information of all devices in the handover group, and the information on the target relay device may, for example, include identifier information of the target relay device.

According to the embodiment of the present disclosure, all member devices in the device member list for each handover group desire to be handed over to the target relay device for the handover group. Therefore, in the embodiment of the present disclosure, devices are grouped based on the handover group, and relay handover can be performed on devices in the same handover group as a whole, thereby reducing signaling overhead and reducing a probability of signaling collision.

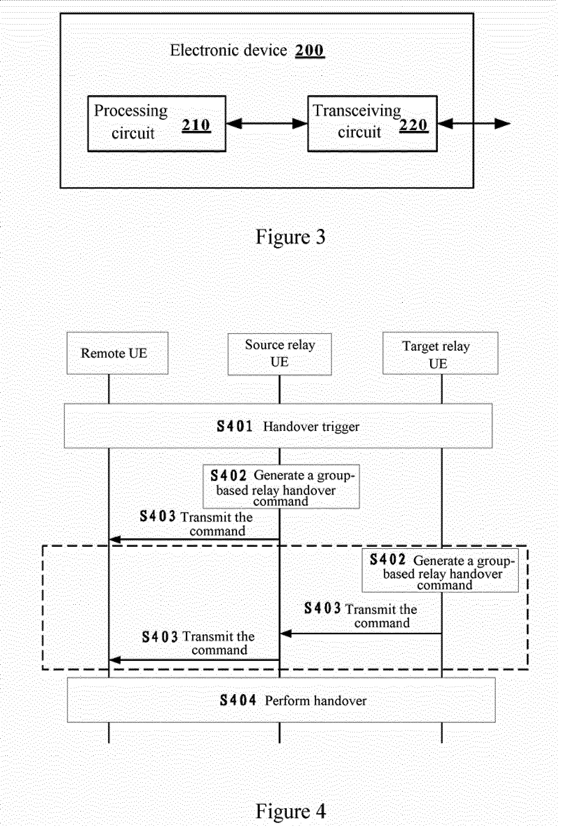

Figure 3 shows a block diagram of a structure of an electronic device 200 according to another embodiment of the present disclosure. As shown in Figure 3, the electronic device 200 may further include a transceiving circuit 220 for transmitting and receiving information.

According to the embodiment of the present disclosure, the electronic device 200 may function as a source relay device in a wireless communication system, that is, remote devices in the device member list for the handover group in the group-based relay handover command each communicate with the network side device via the electronic device 200. Optionally, the device member list may include the electronic device 200 itself. In the embodiment, the transceiving circuit 220 may transmit the group-based relay handover command to the remote device in the device member list for each handover group.

According to the embodiment of the present disclosure, the electronic device 200 may further function as a target relay device in the wireless communication system, that is, devices in the device member list for each handover group in the group-based relay handover command desire to be handed over to the electronic device 200. In other words, the target relay device for the handover group in the group-based relay handover command is the electronic device 200. In the embodiment, the transceiving circuit 220 may transmit the group-based relay handover command to the source relay device serving the remote device in the device member list for each handover group.

Figure 4 shows a schematic flowchart of group-based relay handover according to an embodiment of the present disclosure. In Figure 4, a remote UE originally communicates with a network side device via a source relay UE; based on a trigger event, the remote UE needs to hand over to a target relay UE, and thus communicates with the network side device via the target relay UE. As shown in Figure 4, in step S401, a group-based relay handover process is triggered, that is, a trigger event is detected by one or more trigger entities. In a case that the source relay UE generates the group-based relay handover command, in step S402, the source relay UE generates the group-based relay handover command; and in step S403, the source relay UE transmits the group-based relay handover command to the remote UE included in the device member list in the group-based relay handover command. In a case that the target relay UE generates the group-based relay handover command, in step S402, the target relay UE generates the group-based relay handover command; and in step S403, the target relay UE transmits the group-based relay handover command to the source relay UE serving the remote UE in the device member list in the group-based relay handover command, and the source relay UE forwards the command to a respective remote UE. Subsequently, in step S404, handover is performed.

The electronic device 200 according to the embodiment of the present disclosure is described in detail hereinafter.

### <1. Handover trigger>

According to the embodiment of the present disclosure, the processing circuit 210 may generate a group-based relay handover command based on a trigger event. Here, the trigger event includes events for triggering a group-based relay handover process detected by one or more trigger entities. That is, when one or more trigger entities detect the trigger event, the group-based relay handover process is triggered. According to the embodiment of the present disclosure, the trigger entity detecting the trigger event may be the remote device, the source relay device and the target relay device.

### <1.1 The trigger entity is the remote UE>

According to the embodiment of the present disclosure, in a case that the electronic device 200 functions as the source relay device, the triggering entity may be a remote device served by the electronic device 200. That is, the remote device as the triggering entity communicates with the network side device via the electronic device 200.

According to the embodiment of the present disclosure, the trigger event may include: link quality between the remote device and the electronic device 200 being less than a first threshold.

In the present disclosure, the link quality may be indicated by one or more of signal to interference radio (SIR), signal to interference plus noise ratio (SINR) and signal noise ratio (SNR), which are not limited in the present disclosure.

According to the embodiment of the present disclosure, the remote device may measure the link quality between the remote device and the electronic device 200 periodically or in response to an event, and compares the link quality with the first threshold. The first threshold here indicates a threshold for link quality of a relay service provided for the remote device by the relay device. That is, in a case that the link quality between the remote device and the electronic device 200 is less than the threshold, the electronic device 200 does not adapt to provide the relay service for the remote device any longer.

According to the embodiment of the present disclosure, the trigger event may further include: link quality between the remote device and the electronic device 200 being less than the first threshold and link quality between the remote device and another relay device being greater than the first threshold. That is, the remote device may measure the link quality between the remote device and another relay device periodically or in response to an event. In a case that the electronic device 200 does not adapt to provide the relay service for the remote device and another relay device adapts to provide the relay service for the remote device, the remote device triggers the group-based relay handover process.

In addition, according to the embodiment of the present disclosure, the trigger event may be detected by multiple remote devices at the same time instant or the same time period. If the multiple remote devices communicate with the network side device via the same relay device, the relay device generates the group-based relay handover command based on the trigger event detected by the remote device.

### <1.2 The triggering entity is the source relay UE>

According to the embodiment of the present disclosure, in a case that the electronic device 200 functions as the source relay device, the triggering entity may be the electronic device 200.

According to the embodiment of the present disclosure, the triggering event may include: link quality between the electronic device 200 and the network side device being less than a second threshold.

According to the embodiment of the present disclosure, the relay device may measure the link quality between the relay device and the network side device periodically or in response to an event, and compares the link quality with the second threshold. The second threshold indicates a threshold for link quality of a relay service provided by the relay device. That is, in a case that the link quality between the relay device and the network side device is less than the threshold, the relay device does not adapt to provide the relay service. In this case, the electronic device 200 may trigger the group-based relay handover process, and hand over the remote device served by the electronic device 200 to another relay device.

According to the embodiment of the present disclosure, the trigger event may further include: the link quality between the electronic device 200 and the network side device being less than a third threshold. The third threshold is less than the second threshold.

According to the embodiment of the present disclosure, the relay device may measure the link quality between the relay device and the network side device periodically or in response to an event, and compares the link quality with the third threshold. The third threshold here indicates a threshold for the link quality required when the relay device can normally communicate with the network side device. That is, in a case that the link quality between the relay device and the network side device is less than the threshold, the relay device does not adapt to provide the relay service any longer, and the relay device needs to change into the remote device and thus communicates with the network side device via another relay device. In this case, the electronic device 200 may trigger the group-based relay handover process, and hand over the served remote device to another relay device and change the electronic device 200 into the remote device of another relay device.

According to the embodiment of the present disclosure, the trigger event may further include that: the electronic device 200 receives high-layer signaling, where the high-layer signaling indicates that one or more remote devices served by the electronic device 200 need to perform handover and/or the electronic device 200 needs a relay service.

According to the embodiment of the present disclosure, the electronic device 200 may receive the high-layer signaling. For example, the eNB as the network side device informs the electronic device 200 that one or more remote devices served by the electronic device 200 need to perform relay handover. In this case, the electronic device 200 may trigger the group-based relay handover process, and hand over the remote device instructed in the high-layer signaling to another relay device. In a case that the high-layer signaling further indicates that the electronic device 200 needs the relay service, that is, changing into the remote device, the electronic device 200 may trigger the group-based relay handover process, so that the electronic device 200 communicates with the network side device via another relay device.

As described above, in a case that the source relay device detects that the source relay device needs to stop the trigger event for the relay service for one or more remote devices, the source relay device may generate the group-based relay handover command.

### <1.3 The triggering entity is the target relay UE>

According to the embodiment of the present disclosure, in a case that the electronic device 200 functions as the target relay device, the trigger entity may be the electronic device 200.

According to the embodiment of the present disclosure, the trigger event may include that: the electronic device 200 receives high-layer signaling, where the high-layer signaling indicates that one or more remote devices need to be handed over to the electronic device 200.

According to the embodiment of the present disclosure, in a case of performing operations such as load balancing, the electronic device 200 may receive high-layer signaling. For example, the eNB as the network side device informs the electronic device 200 that one or more remote devices originally served by another relay device need to be handed over to the electronic device 200. In this case, the electronic device 200 may trigger the group-based relay handover process, to hand over the remote devices to the electronic device 200.

As described above, in a case that the target relay device detects a trigger event indicating that one or more remoted devices need to be handed over to the target relay device, the target relay device may generate the group-based relay handover command.

The handover trigger process according to the embodiment of the present disclosure is described above in detail. According to the embodiment of the present disclosure, the triggering entity detecting the trigger event may be the remote device, the source relay device and the target relay device. In a case that the trigger entity is the remote device and the source relay device, the source relay device may generate the group-based relay handover command. In a case that the trigger entity is the target relay device, the target relay device may generate the group-based relay handover command.

### <2. Generation and transmission of the group-based relay handover command>

As described above, the group-based relay handover command may be generated by the source relay device and the target relay device. The generation and transmission process of the command is described based on the two cases hereinafter.

In addition, according to the embodiment of the present disclosure, the group-based relay handover command includes information on a device member list and a target relay device for each handover group of one or more handover groups. Therefore, before the group-based relay handover command is to be generated, it is required to determine the device member list and the target relay device for the handover group.

### <2.1. The source relay UE generates the group-based relay handover command>

According to the embodiment of the present disclosure, in a case that the electronic device 200 functions as the source relay device, the transceiving circuit 220 of the electronic device 200 may transmit the group-based relay handover command to remote devices in the device member list for each handover group. Preferably, the transceiving circuit 220 of the electronic device 200 may broadcast-transmit the group-based relay handover command.

According to the embodiment of the present disclosure, in a case that the electronic device 200 functions as the source relay device, the electronic device 200 may group the handover group , determine the target relay device for each handover group and generate the group-based relay handover command; or the network side device communicating with the electronic device 200 (such as eNB) determines groups the handover group and determines the target relay device for each handover group, and then the electronic device 200 generates the group-based relay handover command.

### <2.1.1 Determine the handover group>

According to the embodiment of the present disclosure, the transceiving circuit 220 may receive information on a desired relay device from one or more remote devices served by the electronic device 200. According to the embodiment of the present disclosure, the information on the desired relay device may include identifier information on the desired relay device. In addition, the desired relay device of one remote device may include one or more relay devices.

According to the embodiment of the present disclosure, the one or more remote devices may be remote devices detecting the trigger event, and the desired relay device indicates a relay device to which the remote device desires to be handed over. That is, in a case that the one or more remote devices detect the trigger event, each of the one or more remote devices may report information on the desired relay device to the relay device serving the remote device, that is, the electronic device 200.

According to the embodiment of the present disclosure, the processing circuit 210 may be configured to group one or more remote devices into one or more handover groups based on the received information on the desired relay device.

According to the embodiment of the present disclosure, the processing circuit 210 may group remote devices having the same desired relay device into a same handover group. Here, the remote device may transmit one or more desired relay devices to the electronic device 200. Here, as long as multiple remote devices have one same desired relay device, the processing circuit 210 may group the multiple remote devices into a same group. For example, the remote device UE1 has desired relay devices A and B, the remote device UE2 has desired relay devices A and C, and the remote device UE3 has desired relay devices A and D, the processing circuit 210 may group the remote devices UE1 to UE3 into the same handover group since the remote devices UE1 to UE3 have the same desired relay device A. For example, the remote device UE4 has a desired relay device E, the remote device UE5 has desired relay devices E and F and the remote device UE6 has a desired relay device F, the processing circuit 210 may group the remote devices UE4 and UE5 into one handover group, and group the remote device UE6 into another handover group. Alternatively, the processing circuit 210 may group the remote device UE4 into one handover group, and group the remote devices UE5 and UE6 into another handover group.

According to the embodiment of the present disclosure, the processing circuit 210 may use all determined handover groups as the handover groups included in the group-based relay handover command. That is, the processing circuit 210 may determine a device member list for each handover group included in the group-based relay handover command based on the determined handover groups. For example, the processing circuit 210 obtains two handover groups based on information on a desired relay device reported by the remote devices: a handover group G1 including the remote devices UE1 to UE3; and a handover group G2 including the remote devices UE4 and UE5. The generated group-based handover command includes information on device member list UE1 to UE3 of the handover group G1 and the target relay device; and information on device member lists UE4 to UE5 of the handover group G2 and the target relay device.

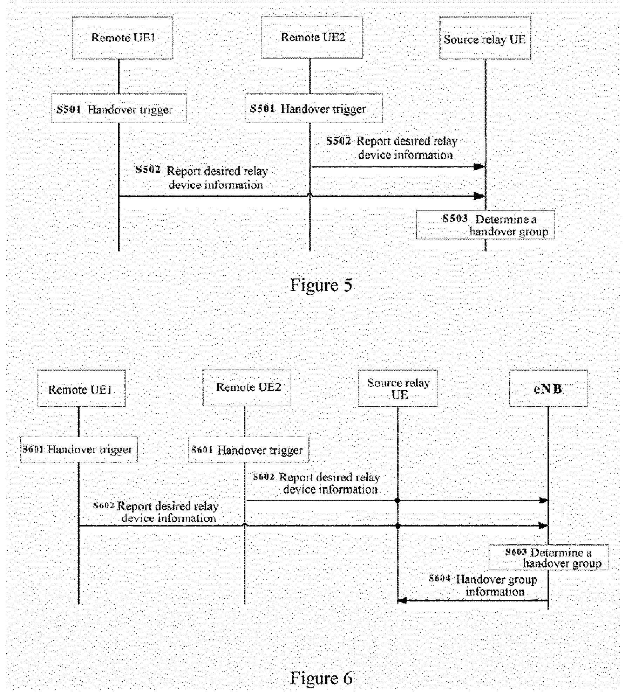

Figure 5 shows a signaling flowchart of grouping a handover group according to an embodiment of the present disclosure. As shown in Figure 5, both the remote UE1 and the remote UE2 communicate with the network side device via the source relay UE. The source relay UE here may be implemented by the electronic device 200. In step S501, the remote UE1 and the remote UE2 each detect a trigger event. Subsequently, in step S502, the remote UE1 and the remote UE2 each report information on the desired relay device to the source relay UE. Subsequently, in step S503, the source relay UE groups the remote UE1 and the remote UE2 into the handover group based on information on the desired relay device for the remote UE1 and the remote UE2. Here, Figure 5 shows only the case that the source relay UE provides a relay service for two remote UEs. Practically, the source relay UE may serve more than two remote UEs.

According to the above embodiments of the present disclosure, the triggering entity detecting the trigger event is the remote device, and the source relay device may receive information on the desired relay device reported by multiple remote devices at the same time instant or time period, thereby determining the handover group. In this way, multiple remote devices to perform the relay handover process are grouped into the handover group, and the devices in the handover group can perform some operations by cooperation, thereby reducing signaling overhead and reducing a probability of signaling collision.

According to the embodiment of the present disclosure, the transceiving circuit 220 may forward the received information on the desired relay device to the network side device, and the network side device groups one or more remote devices into one or more handover groups based on the information on the desired relay device for the remote device. Subsequently, the transceiving circuit 220 may receive information on the determined handover group from the network side device, and determine the device member list for each handover group included in the group-based relay handover command based on the information of the handover group received from the network side device.

Figure 6 shows a signaling flowchart of determining handover groups according to an embodiment of the present disclosure. As shown in Figure 6, both the remote UE1 and the remote UE2 communicate with the eNB via the source relay UE. The source relay UE may be implemented by the electronic device 200 described above. In step S601, the remote UE1 and the remote UE2 each detects a trigger event. Subsequently, in step S602, the remote UE1 and the remote UE2 each report information on a desired relay device to the eNB via the source relay UE. Subsequently, in step S603, the eNB groups the remote UE1 and the remote UE2 into a handover group based on information on the desired relay device for the remote UE1 and the remote UE2. Subsequently, in step S604, the eNB transmits information on the determined handover group to the source relay UE. Here, Figure 6 shows only the case that the source relay UE provides a relay service for two remote UEs. Practically, the source relay UE may serve more remote UEs.

The embodiment shown in Figure 6 is similar to that shown in Figure 5, the trigger entity detecting the trigger event is a remote device. The embodiment in Figure 6 differs from the embodiment in Figure 5 in that the handover group is determined by the network side device. Similarly, multiple remote devices to perform a relay handover process are grouped into the handover group, and devices in the same handover group can perform some operations by cooperation, thereby reducing signaling overhead and reducing a probability of signaling collision.

According to the embodiment of the present disclosure, the transceiving circuit 220 may be further configured to transmit request information on a desired relay device to each remote device of one or more remote devices. Further, the transceiving circuit 220 may receive the information on the desired relay device transmitted in response to the request information on the desired relay device from each remote device.

Here, the transceiving circuit 220 may transmit the request information on the desired relay device to the remote device to perform the relay handover. The electronic device 200 may determine the remote device to perform relay handover based on different trigger events.

According to the embodiment of the present disclosure, the trigger entity detecting the trigger event may be the electronic device 200.

According to the embodiment of the present disclosure, the remote device to perform relay handover may be all remote devices served by the electronic device 200. For example, in a case that the trigger event is an event that link quality between the electronic device 200 and the network side device is less than the second threshold or the third threshold, the electronic device 200 may transmit the request information on the desired relay device to all the served remote devices, to request desired delay devices for all the remote devices.

According to the embodiment of the present disclosure, in a case that the trigger event is an event that the link quality between the electronic device 200 and the network side device is less than the third threshold, the processing circuit 210 can further determine a desired relay device to which the electronic device 200 desires to be handed over. Here, in a case that the link quality between the electronic device 200 and the network side device is less than the third threshold, the electronic device 200 needs to change into the remote device and thus communicates with the network side device via another relay device. Similarly, the desired relay device of the electronic device 200 may include one or more relay devices. Further, the processing circuit 210 may further group the electronic device 200 and all remote devices served by the electronic device 200 into one or more handover groups based on the desired relay device of the electronic device 200 and the received desired relay device for the remote devices. According to the embodiment of the present disclosure, the processing circuit 210 may group the remote devices or the electronic device 200 having the same desired relay devices into the same handover group. For example, remote devices in the handover group G2 have the same desired relay device UE1, and the desired relay device of the electronic device 200 includes UE1, therefore the electronic device 200 may be grouped into the handover group G2. The grouping method is similar to the grouping method for the remote devices described above, which is not repeated here. In addition, in a case that the device member list of the handover group includes the electronic device 200, the electronic device 200 may store the generated group-based relay handover command.

According to the embodiment of the present disclosure, the remote device to perform the relay handover may include a part of remote devices served by the electronic device 200. For example, in a case that the trigger event is that the electronic device 200 receives high-layer signaling indicating that one or more remote devices served by the electronic device 200 need to perform relay handover. The electronic device 200 may transmit request information on the desired relay device to the one or more remote devices instructed in the high-layer signaling, to group the one or more remote devices into the handover group. In addition, in a case that the trigger event is that the electronic device 200 receives high-layer signaling indicating that the electronic device 200 needs a relay service, the electronic device 200 may group the electronic device 200 into the handover group.

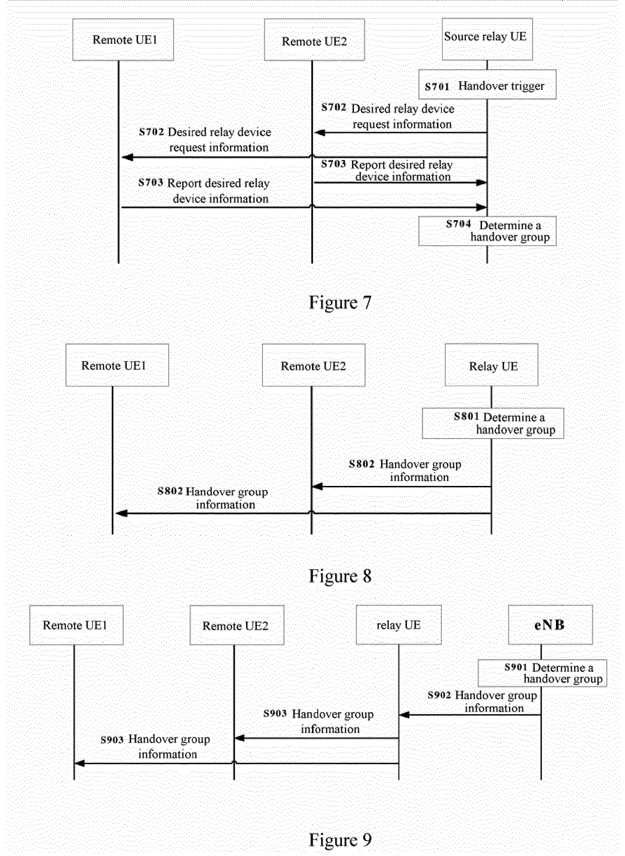

Figure 7 shows signaling flowchart of determining handover groups according to an embodiment of the present disclosure. As shown in Figure 7, the remote UE1 and the remote UE2 each communicate with the network side via the source relay UE. The source relay UE here may be implemented by the electronic device 200 described above. In step S701, the source relay UE detects a trigger event. Subsequently, in step S702, the source relay UE may transmit request information on a desired relay device to a remote UE to perform the relay handover. It is assumed that the source relay UE transmits the request information on the desired relay device to the remote UE1 and the remote UE2. Subsequently, in step S703, the remote UE1 and the remote UE2 report information on the desired relay device to the source relay UE. Subsequently, in step S704, the source relay UE groups the remote UE1 and the remote UE2 into the handover group based on the information on the desired relay device for the remote UE1 and the remote UE2. Alternatively, the source relay UE may group the remote UE1, the remote UE2 and the source relay UE into the handover group based on information of the desired relay device for the remote UE1 and the remote UE2 and information of the desired relay device for the source relay UE.

As described above, after the remote device or the source relay device detects the trigger event, the electronic device 200 as the source relay device or the network side device serving the electronic device 200 determines the handover group based on the desired relay devices reported by multiple remote UEs, thus the grouping process may be regarded as a dynamic grouping process. In such embodiment, during the grouping process, remote devices to perform the relay handover are used. Alternatively, information on the desired relay device for the source relay device requiring the relay service is used, thus the grouping is accurate.

According to the embodiment of the present disclosure, information on the handover group is determined based on information irrelevant to the desired relay device. This process may occur before or after the remote device or the source relay device detects the trigger event. This is referred to as semi-static grouping.

According to the embodiment of the present disclosure, the handover group may be determined by the electronic device 200 as the relay device, or may be determined by the network side device (for example eNB).

According to the embodiment of the present disclosure, the processing circuit 210 of the electronic device 200 as the relay device may group the electronic device 200 and multiple remote devices served by the electronic device 200 into one or more handover groups, and the transceiving circuit 220 may transmit information on each handover group to all remote devices in the handover group.

According to the embodiment of the present disclosure, the processing circuit 210 may determine the handover group based on at least one type of the following information: location information of each remote device, location information of the electronic device 200, quality information on a link between each remote device and the electronic device 200, quality information on a link between each remote device and a desired relay device for the remote device, and information on a connection state between each remote device and the electronic device 200.

According to the embodiment of the present disclosure, the remote device may report the location information to the electronic device 200 periodically or non-periodically. Further, the remote device may further report the quality information on the link between the remote device and the electronic device 200 and the quality information on the link between the remote device and its desired relay device to the electronic device 200 periodically or non-periodically. In a case that the electronic device 200 receives the above information, the electronic device 200 and the remote device are grouped into the handover group based on at least one of the above information and the information on the connection state between each remote device and the electronic device 200.

In addition, the transceiving circuit 220 may transmit, to a remote device served by the electronic device 200, information on a handover group where the remote device is located. The information on the handover group may include information on all devices in the handover group. Preferably, the information on the handover group may include identifier information on all devices in the handover group. Further, the processing circuit 210 may further store information on the handover group where the electronic device 200 is located.

As described above, according to the embodiment of the present disclosure, each relay device may group the served remote devices and the relay device into a handover group. In this way, the relay device can group the remote devices and the relay device having a similar handover requirement into the same handover group, and all devices in the handover group as a whole perform the handover group process, thereby reducing signaling overhead and reducing a probability of signaling collision.

Figure 8 shows a signaling flowchart of determining a handover group according to an embodiment of the present disclosure. As shown in Figure 8, the remote UE1 and the remote UE2 communicate with the network side device via the relay UE. The relay UE here may be implemented by the electronic device 200. In step S801, a relay UE groups all remote UEs in a service range of the relay UE and the relay UE. In step S802, the relay UE transmits information on the handover group to all remote UEs. Further, the relay UE may store information on a handover group where the relay UE is located.

According to the embodiment of the present disclosure, the handover group may be determined by the network side device. That is, the transceiving circuit 220 of the electronic device 200 may receive, from the network side device, information on a handover group where the electronic device 200 is located and information on a handover group where the remote device served by the electronic device 200 is located, and the processing circuit 210 may store the information on the handover group where the electronic device 200 is located. In addition, the transceiving circuit 220 may further transmit the information on the handover group where the remote device is located to the remote device served by the electronic device 200.

Here, the network side device may determine the information on the handover group based on at least one type of the following information: location information of the electronic device 200, location information of a remote device served by the electronic device 200, quality information on a link between the electronic device 200 and the network side device, and quality information on a link between a remote device served by the electronic device 200 and the network side device.

Figure 9 shows a signaling flowchart of determining a handover group according to an embodiment of the present disclosure. As shown in Figure 9, the remote UE1 and the remote UE2 each communicate with the eNB via the relay UE. The relay UE here may be implemented by the electronic device 200. In step S901, the eNB groups all remote UEs and the relay UEs in a service range of the eNB. In step S902, the eNB transmits information on a handover group to a relay UE in the service range of the eNB. In step S903, the relay UE transmits information on the handover group to all remote UEs served by the relay UE. Further, the relay UE may store information on the handover group where the relay UE is located.

As described above, in the embodiment for the semi-static grouping, it is unnecessary for all remote devices to report the information on the desired relay device, and thus the signaling overhead is low. It should be noted that, the process of semi-static grouping is performed independently from the group-based relay handover process. That is, the process of semi-static grouping may occur before or during the group-based relay handover process. In addition, the process of semi-static grouping may be performed periodically or non- periodically.

The process of determining the handover group is described above in conjunction with Figure 5 to Figure 9. After the electronic device 200 as the source relay device obtains the information on the handover group, the group-based relay handover command may be generated based on information on the handover group.

### <2.1.2 Determine the target relay device>

As described above, according to an embodiment of the present disclosure, the transceiving circuit 220 may receive information on the desired relay device from one or more remote devices served by the electronic device 200, and the processing circuit 210 may determine the handover group based on information on the desired relay device for the remote device. In addition, the processing circuit 210 may further determine a target relay device for each handover group based on information on the desired relay device for the remote device.

According to the embodiment of the present disclosure, in a case of dynamic grouping, the target relay device for the handover group may be the same desired relay device for all devices in the handover group.

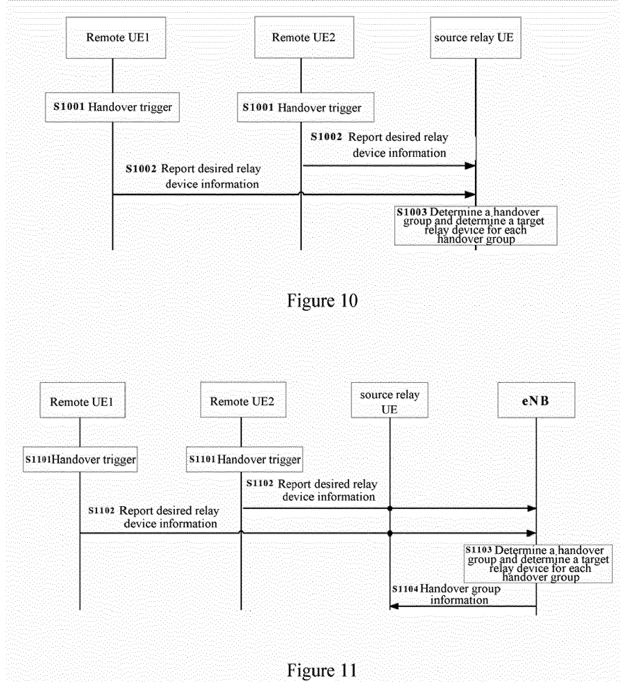

Figure 10 shows a signaling flowchart of determining a target relay device according to an embodiment of the present disclosure. As shown in Figure 10, both the remote UE1 and the remote UE2 communicate with the network side device via the source relay UE. The source relay UE here may be implemented by the electronic device 200. In step S1001, the remote UE1 and the remote UE2 each detect a trigger event. Subsequently, in step S1002, the remote UE1 and the remote UE2 each report information on the desired relay device to the source relay UE. Subsequently, in step S1003, the source relay UE groups the remote UE1 and the remote UE2 into the handover group based on information on the desired relay device for the remote UE1 and the remote UE2, and determines a target relay device for each handover group. Here, Figure 10 shows only the case that the source relay UE provides a relay service for two remote UEs. Practically, the source relay UE may serve more than two remote UEs.

As described above, the transceiving circuit 220 of the electronic device 200 may forward the information on the desire relay device reported by the remote device to the network side device, and the network side device determines the handover group based on the information on the desired relay device for the remote device. In addition, the network side device may further determine the target relay device for each handover group based on the information of the desired relay device for the remote device.

That is, the transceiving circuit 220 may receive information on the handover group from the network side device. The information on the handover group includes information on devices included in each handover group and a target relay device for each handover group.

Figure 11 shows a signaling flowchart of determining a target relay device according to an embodiment of the present disclosure. As shown in Figure 11, the remote UE1 and the remote UE2 communicate with the eNB via a source relay UE. The source relay UE here may be implemented by the electronic device 200. In step S1101, the remote UE1 and the remote UE2 each detect a trigger event. Subsequently, in step S1102, the remote UE1 and the remote UE2 each report information on the desired relay device to the eNB via the source relay UE. Subsequently, in step S1103, the eNB groups the remote UE1 and the remote UE2 into the handover group based on information on the target handover device for the remote UE1 and the remote UE2. Subsequently, in step S1104, the eNB transmits the information on the handover group to the source relay UE. The information on the handover group here includes information on devices included in each handover group and a target relay device for each handover group. Here, Figure 11 shows only the case that the source relay UE provides a relay service for two remote UEs. Practically, the source relay UE may serve more than two remote UEs.

As described above, in a case that the triggering entity is the electronic device 200, the transceiving circuit 220 of the electronic device 200 may transmit request information for the desired relay device to the remote device to perform relay handover.

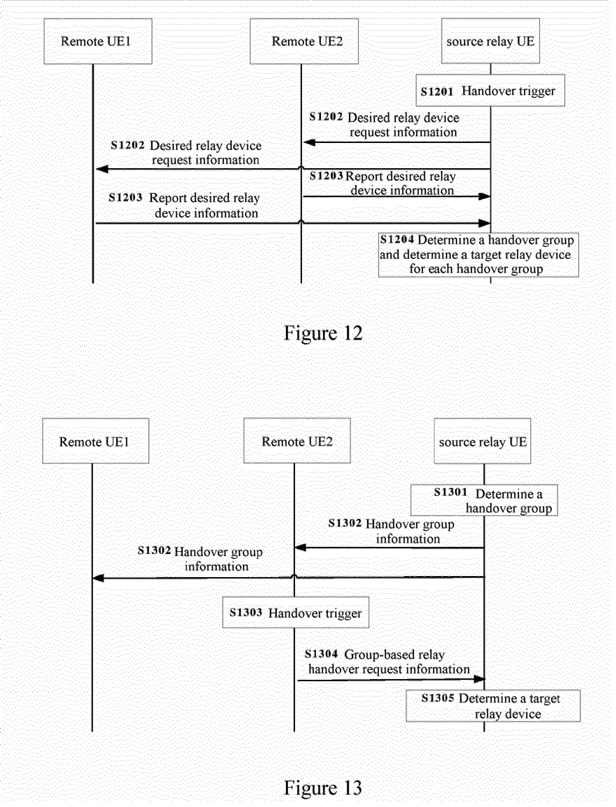

Figure 12 shows a signaling flowchart of determining a target relay device according to an embodiment of the present disclosure. As shown in Figure 12, the remote UE1 and the remote UE2 each communicate with the network side device via the source relay UE. The source relay UE here may be implemented by the electronic device 200 described above. In step S1201, the source relay UE detects a trigger event. Subsequently, in step S1202, the source relay UE may transmit request information on a desired relay device to a remote UE to perform the relay handover. It is assumed that the source relay UE transmits the request information on the desired relay device to the remote UE1 and the remote UE2. Subsequently, in step S1203, the remote UE1 and the remote UE2 report information on the desired relay device to the source relay UE. Subsequently, in step S1204, the source relay UE groups the remote UE1 and the remote UE2 into the handover group based on the information on the desired relay device for the remote UE1 and the remote UE2, and determines the target relay device for each handover group. Alternatively, the source relay UE may group the remote UE1, the remote UE2 and the source relay UE into the handover group based on information of the desired relay device for the remote UE1 and the remote UE2 and information of the desired relay device for the source relay UE, and determines the target relay device for each handover group.

According to the embodiment of the present disclosure, in a case that the electronic device 200 determines or obtains the handover group and the target relay device for each handover group, a group-based relay handover command may be generated. The handover group included in the group-based relay handover command is a handover group to perform a relay handover process.

In the embodiment of the dynamic grouping, the handover group to perform the relay handover process is the handover group determined by the electronic device 200 or the eNB. Therefore, the electronic device 200 uses the determined handover group as the handover group included in the group-based relay handover command, and thus determines a device member list and a target relay device for each handover group, thereby generating a command. In this case, the electronic device 200 transmits the command to the remote device in the device member list of the handover group included in the command. Practically, the electronic device 200 transmits the command to remote devices reporting the desired relay device information.

Hereinafter a process of determining the target relay device in a case of semi-static grouping is described in detail.

According to an embodiment of the present disclosure, the processing circuit 210 may perform relay reselection measuring to determine a target relay device for each handover group. According to the embodiment of the present disclosure, since the electronic device 200 provides a service for the remote device, the electronic device 200 knows information on the remote device, and the electronic device 200 is relatively close to the remote device in a geographical location, thereby determining a target relay device for a handover group where the remote device is located. Here, the electronic device 200 may perform relay reselection measuring to determine one or more desired relay devices, and determines one of the one or more desired relay devices as a target relay device for the handover group.

According to the embodiment of the present disclosure, in a case that the trigger entity is a remote device, the transceiving circuit 220 may receive group-based relay handover request information from the remote device. The group-based relay handover request information indicates the remote device desires to perform the relay handover operation. Further, the processing circuit 210 may perform the relay reselection measuring in response to the received group-based relay handover request information.

Figure 13 shows a signaling flowchart of determining a target relay device according to an embodiment of the present disclosure. As shown in Figure 13, the remote UE1 and the remote UE2 communicate with the network side device via a source relay UE. In step S1301, the source relay UE groups all remote UEs and the relay UE in a service range of the source relay UE. In step S1302, the source relay UE transmits information on the handover group to all remote UEs. Further, the source relay UE may further store information on a handover group where the source relay UE is located. In step S1303, the remote UE2 detects the trigger event. In step S1304, the remote UE2 transmits the group-based relay handover request information to the source relay UE. In step S1305, the source relay UE performs the relay reselection measuring to determine a target relay device for a handover group where the remote UE2 is located. Here, only a case that the source relay UE determines the handover group by a semi-static manner is described. Practically, the eNB may determine the handover group in the semi-static manner. In addition, Figure 13 shows only the case that the determining the handover group in the semi-static manner occurs before the handover trigger process. Practically, the process of determining the handover group in the semi-static manner may be performed at any time instant after the handover trigger process and before the generating of group-based relay handover command.

According to the embodiment of the present disclosure, in a case that the electronic device 200 determines the target relay device, a group-based relay handover command may be generated. A handover group included in the group-based relay handover command is a handover group to perform the relay handover process. In the embodiment described above, the handover group to perform the relay handover process is the handover group where the remote device detecting the trigger event is located. That is, the electronic device 200 uses the handover group where the remote UE2 is located as the handover group included in the group-based relay handover command. In this way, the generated command includes information on a device member list and a target relay device for a handover group where the remote UE2 is located. Subsequently, the electronic device 200 may transmit the command to all remote devices in the handover group where the remote UE2 is located. That is, although other remote device in the handover group where the remote UE2 is located detects no trigger event, the other remote device receives the group-based relay handover command and performs the group-based relay handover process.

According to the embodiment of the present disclosure, in a case that the triggering entity is a source relay device, the processing circuit 210 may perform relay reselection measuring in response to that the trigger event is detected.

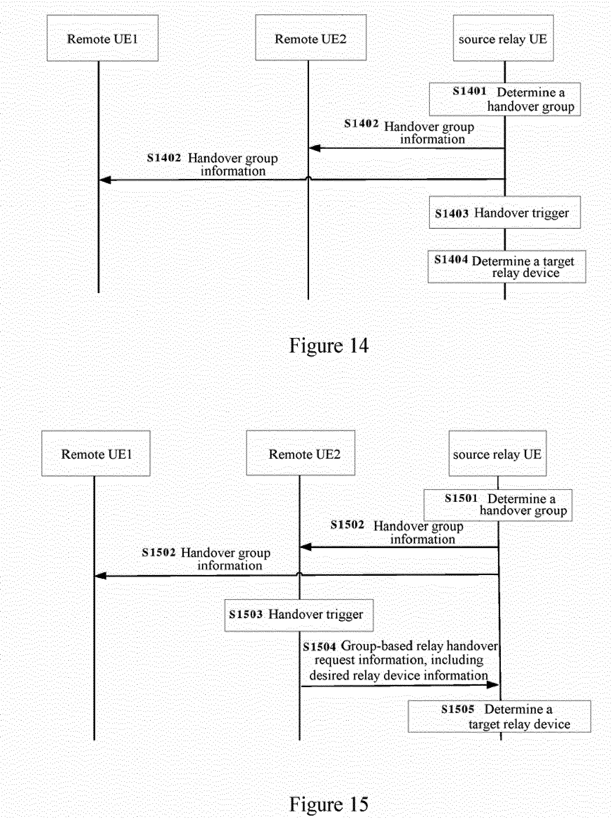

Figure 14 shows a signaling flowchart of determining a target relay device according to an embodiment of the present disclosure. As shown in Figure 14, the remote UE1 and the remote UE2 communicate with the network side device via a source relay UE. In step S1401, the source relay UE groups all remote UEs and the relay UE in a service range of the source relay UE. In step S1402, the source relay UE transmits information on the handover group to all remote UEs. Further, the source relay UE may further store information on a handover group where the source relay UE is located. In step S1403, the source relay UE detects the trigger event. In step S1404, the source relay UE performs the relay reselection measuring to determine a target relay device for a handover group where the remote device to perform the relay handover is located. Similarly, Figure 14 shows only a case that the source relay UE determines the handover group by a semi-static manner. Practically, the eNB may determine the handover group in the semi-static manner. In addition, Figure 14 shows only the case that the determining the handover group in the semi-static manner occurs before the handover trigger process. Practically, the process of determining the handover group in the semi-static manner may be performed at any time instant after the handover trigger process and before the generating of group-based relay handover command.

According to the embodiment of the present disclosure, in a case that the electronic device 200 determines the target relay device, the group-based relay handover command may be generated. The handover group included in the group-based relay handover command is the handover group to perform the relay handover process. In the embodiment described above, the handover group to perform the relay handover process is the handover group where the remote device to perform the relay handover (optionally, including the source relay device itself) is located.

As described above, in a case that the trigger entity is a source relay device, the source relay device may determine the remote device to perform relay handover (optionally, including the source relay device itself) based on different trigger events. Specifically, in a case that link quality between the electronic device 200 and the network side device is less than the second threshold, the device to perform the relay handover is all remote devices served by the electronic device 200. In a case that the link quality between the electronic device 200 and the network side device is less than the third threshold, the device to perform the relay device includes all remote devices served by the electronic device 200 and the electronic device 200 itself. In a case that the trigger event is an event that the electronic device 200 receives high-layer signaling indicating that one or more remote devices served by the electronic device 200 need to perform the relay handover or indicating that the electronic device 200 needs a relay service, the device to perform the relay handover is the remote device instructed in the high-layer signaling (optionally, including the electronic device 200 itself).

In the above embodiment described above, the electronic device 200 uses the handover group where the remote device to perform relay handover (optionally including the source relay device itself) is located as the handover group included in the group-based relay handover command. In this way, the generated command includes information on the device member list and the target relay device for the handover group. Subsequently, the electronic device 200 may transmit the command to all remote devices in the handover group. In a case that the electronic device 200 itself needs to perform a relay service, the electronic device 200 may further store the command.

As described above, the electronic device 200 may perform relay reselection measuring to determine a target relay device for the handover group to perform the relay handover. In this way, signaling overhead and processing time can be saved.

According to the embodiment of the present disclosure, in a case of semi-static grouping, the electronic device 200 may determine the target relay device for the handover group where the remote device is located based on information on a desired relay device reported by the remote device.

According to the embodiment of the present disclosure, in a case that the remote device is a trigger entity, the electronic device 200 may receive group-based relay handover request information from the remote device. The group-based relay handover request information includes information on a desired relay device for the remote device. Here, the information on the desired relay device for the remote device includes identifier information of the desired relay device for the remote device, and the desired relay device for the remote device may include one or more desired relay devices. In this case, the processing circuit 210 may determine one desired relay device for the remote device as the target relay device for the handover group where the remote device is located.

Figure 15 shows a signaling flowchart of determining a target relay device according to an embodiment of the present disclosure. As shown in Figure 15, the remote UE1 and the remote UE2 communicate with the network side device via a source relay UE. In step S1501, the source relay UE groups all remote UEs and the relay UE in a service range of the source relay UE. In step S1502, the source relay UE transmits information on the handover group to all remote UEs. Further, the source relay UE may further store information on a handover group where the source relay UE is located. In step S1503, the remote UE2 detects the trigger event. In step S1504, the remote UE2 transmits the group-based relay handover request information to the source relay UE. The request information includes information on a desired relay device for the remote UE2. In step S1505, the source relay UE determines one desired relay device for the remote UE2 as a target relay device for a handover group where the remote UE2 is located. Here, only a case that the source relay UE determines the handover group by a semi-static manner is described. Practically, the eNB may determine the handover group in the semi-static manner. In addition, Figure 15 shows only the case that the determining the handover group in the semi-static manner occurs before the handover trigger process. Practically, the process of determining the handover group in the semi-static manner may be performed at any time instant after the handover trigger process and before the generating of group-based relay handover command.

Similarly, in the embodiment described above, the handover group to perform the relay handover process is the handover group where the remote device detecting the trigger event is located. That is, the electronic device 200 uses the handover group where the remote UE2 is located as the handover group included in the group-based relay handover command. In this way, the generated command includes information on a device member list and a target relay device for a handover group where the remote UE2 is located. Subsequently, the electronic device 200 may transmit the command to all remote devices in the handover group where the remote UE2 is located. That is, although other remote device in the handover group where the remote UE2 is located detects no trigger event, the other remote device receives the group-based relay handover command and performs the group-based relay handover process.

According to the embodiment of the present disclosure, in a case that the trigger entity is the electronic device 200 as the source relay UE, the transceiving circuit 220 may transmit desired relay device request information to one or more of remote devices to perform the relay handover. Here, since the electronic device 200 knows information on the handover group of the remote devices served by the electronic device 200 in advance, after determining the remote device to perform the relay handover, the electronic device 200 may determine the remote devices to which the desired relay device request information is to be transmitted according to a certain rule. Preferably, the electronic device 200 may transmit the desired relay device request information to one remote device selected from each handover group to perform the relay handover. More preferably, the selected remote device may have a higher battery power level or better link quality and so on.

Further, the transceiving circuit 220 may receive, from the remote device, the desired relay device information transmitted in response to the desired relay device request information. Subsequently, the processing circuit 210 may determine a target relay device for each handover group to perform the relay handover based on the received desired relay device information. Specifically, in a case that only one remote device in the same handover group reports the desired relay device, the processing circuit 210 may determine one desired relay device for the remote device as the target relay device. In a case that multiple remote devices in the same handover group report the desired relay device, the processing circuit 210 may ensure that the number of the remote devices for which the desired relay device includes the determined target relay device is as great as possible, among the multiple remote devices. For example, the remote UE1 and the remote UE2 in the handover group G1 reports the desired relay device, the desired relay device for the remote UE1 is R1 and R2, and the desired relay device for the remote UE2 is R1 and R3. In this case, the processing circuit 210 may determine that the target relay device for the handover group G1 is R1. For example, the remote UE2 to UE4 in the handover group G2 report the desired relay device, the desired relay device for the remote UE2 is R4 and R5, the desired relay device for the remote UE3 is R4 and R6, and the desired relay device for the remote UE4 is R7 and R8, thus the processing circuit 210 may determine that the target relay device for the handover group G2 is R4.

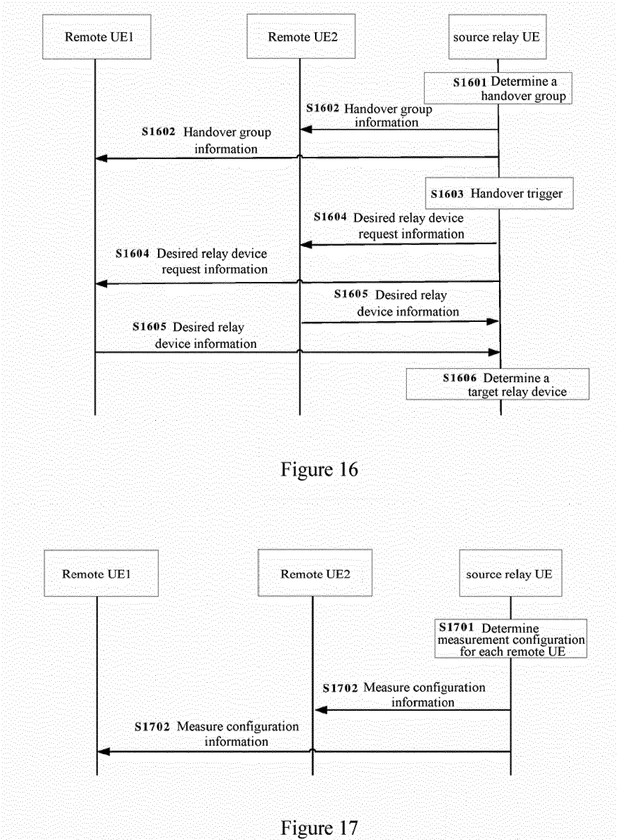

Figure 16 shows a signaling flowchart of determining a target relay device according to an embodiment of the present disclosure. As shown in Figure 16, the remote UE1 and the remote UE2 communicate with the network side device via a source relay UE. In step S1601, the source relay UE groups all remote UEs and the relay UE in a service range of the source relay UE. In step S1602, the source relay UE transmits information on the handover group to all remote UEs. Further, the source relay UE may further store information on a handover group where the source relay UE is located. In step S1603, the source relay UE detects the trigger event. In step S1604, the source relay UE transmits the desired relay device request information to a part of the remote UEs. In step S1605, the remote UE1 and the remote UE2 receiving the desired relay device request information report information on the desired relay device to the source relay UE. In step S1606, the source relay UE determines a target relay device for each handover group to perform the relay handover. Here, only a case that the source relay UE determines the handover group by a semi-static manner is described. Practically, the eNB may determine the handover group in the semi-static manner. In addition, Figure 16 shows only the case that the determining the handover group in the semi-static manner occurs before the handover trigger process. Practically, the process of determining the handover group in the semi-static manner may be performed at any time instant after the handover trigger process and before the generating of group-based relay handover command.

Similarly, in a case that the electronic device 200 determines the target relay device, a group-based relay handover command may be generated. A handover group included in the group-based relay handover command is a handover group to perform the relay handover process. As described in the above embodiment, the handover group to perform the relay handover process is a handover group where a remote device to perform the relay handover (optionally including the source relay device itself) is located. The electronic device 200 uses the handover group where the remote device to perform the relay handover (optionally including the source relay device itself) is located as the handover group included in the group-based relay handover command. In this way, the generated command includes information on a device member list and a target relay device for the handover group. Subsequently, the electronic device 200 may transmit the command to all remote devices in the handover group. In a case that the electronic device 200 itself needs to perform the relay service, the electronic device 200 may store the command.

As described above, the electronic device 200 may determine the target relay device for the handover group based on the desired relay device reported by the remote device. In this way, a more accurate and reliable target relay device can be determined.

As described above, according to the embodiment of the present disclosure, the electronic device 200 as the source relay device may generate the group-based relay handover command, including information on a device member list and a target relay device for each handover group. In this way, each handover group may perform the relay handover process by cooperation, thereby reducing signaling overhead and reducing a risk of signaling collision.

### <2.1.3. Determine the group header device>

According to an embodiment of the present disclosure, the processing circuit 210 may further determine a group header device for a handover group. In addition, the group header device may be determined by the network side device, and the transceiving circuit 220 may receive information on the group header device for each handover group from the network side device. The information on the group header device may include identifier information of the group header device.

According to the present disclosure, the group header device for the handover group may be determined by the device determining the handover group. For example, in a case that the electronic device 200 determines the handover group, the electronic device 200 may determine the group header device. In a case that the network side device determines the handover group, the network side device may determine the group header device.

According to the embodiment of the present disclosure, the group header device may be a relay device or a remote device. In addition, since the group header device has large power consumption, the group header device may change periodically or non-periodically.

Preferably, for the handover group including the electronic device 200 itself, since the electronic device 200 knowns the information on all remote devices, the electronic device 200 may be determined as the group header device for the handover group where the electronic device 200 is located. For the handover group including no electronic device 200, one remote device may be determined as the group header device for the handover group based on information on all remote devices in the handover group (for example battery power information and geographical location information).

According to the embodiment of the present disclosure, the information on the group header device may be included in a group-based relay handover command. That is, the group-based relay handover command may include a device member list, information on a target relay device and information on a group header device for each handover group.

In addition, in the embodiment of the semi-static grouping, the information for the group header device may be included in the information on a handover group so as to be transmitted to each relay device and remote device in the handover group.

As described above, according to the embodiment of the present disclosure, the group header device for each handover group can be determined, and the group header device functions as representative of the handover group to perform the handover process. In this way, the signaling process can be simplified and the signaling overhead can be reduced greatly.

### <2.1.4 Measurement configuration>

According to an embodiment of the present disclosure, the remote device may report information on the desired relay device to the source relay device serving the remote device. According to the embodiment of the present disclosure, the relay device can determine a measurement configuration of each remote device served by the relay device, and transmits measurement configuration information to each remote device served by the relay device. The measurement configuration information indicates time-frequency resource information for measuring the desired relay device by the remote device.

According to the embodiment of the present disclosure, the relay device may divide a discovery period for measuring the desired relay device (including time resources and frequency resources) into multiple sub-periods, and each sub-period includes time resource information and frequency resource information. The time resource information indicates subframes for measuring the desired relay device, and the frequency resource information indicates a frequency band for measuring the desired relay device. Subsequently, the relay device may allocate different sub-periods for all remote devices according to a certain rule. In this way, the remote device only needs to use the time-frequency resource allocated by the relay device to measure the desired relay device, thereby reducing resources to be monitored and reducing power consumption.

Figure 17 shows a signaling flowchart of configuring measurement configuration for a remote device according to an embodiment of the present disclosure. As shown in Figure 17, the remote UE1 and the remote UE2 communicate with the network side device via the source relay UE. In step S1701, the source relay UE determines a measurement configuration of each remote UE served by the source relay UE. In step S1702, the source relay UE transmits the measurement configuration information to the remote UE served by the source relay UE.

According to the embodiment of the present disclosure, the relay device may determine the measurement configuration for the remote device served by the relay device periodically, and transmits the measurement configuration information to the remote device served by the relay device periodically. In addition, the relay device may determine the measure configuration for the remote device served by the relay device periodically, and carries the measurement configuration information in the desired relay device request information transmitted to the remote device.

According to the embodiment of the present disclosure, the relay device may determine the measurement configuration information of the remote device based on battery power information of the remote device served by the relay device. According to the embodiment of the present disclosure, the relay device may receive the battery power information of the remote device from the remote device served by the relay device. According to the embodiment of the present disclosure, the relay device may transmit the battery power request information to the remote device served by the relay device. Here, the battery power request information may be periodically transmitted to the remote device and the battery power information may be periodically received from the remote device, such that the relay device can periodically determine the measurement configuration for each remote device.

According to the embodiment of the present disclosure, the relay device may allocate a sub-period with more time-frequency resource for the remote device with sufficient battery power, and allocate a sub-period with less time-frequency resource for the remote device with insufficient battery power.

In addition, the relay device may determine the group header device based on the battery power information reported by the remote device. For example, in a case of determining the group header device by the relay device, the relay device may determine the remote device with sufficient battery power as the group header device.

Further, as described above, in a case that the grouping is performed in a semi-static manner and the source relay device functions as the trigger entity, the source relay device may determine the device to which the desired relay device request information is to be transmitted. For example, the source relay device may select one remote device with sufficient battery power from each handover group, and transmits the desired relay device request information to the remote device.

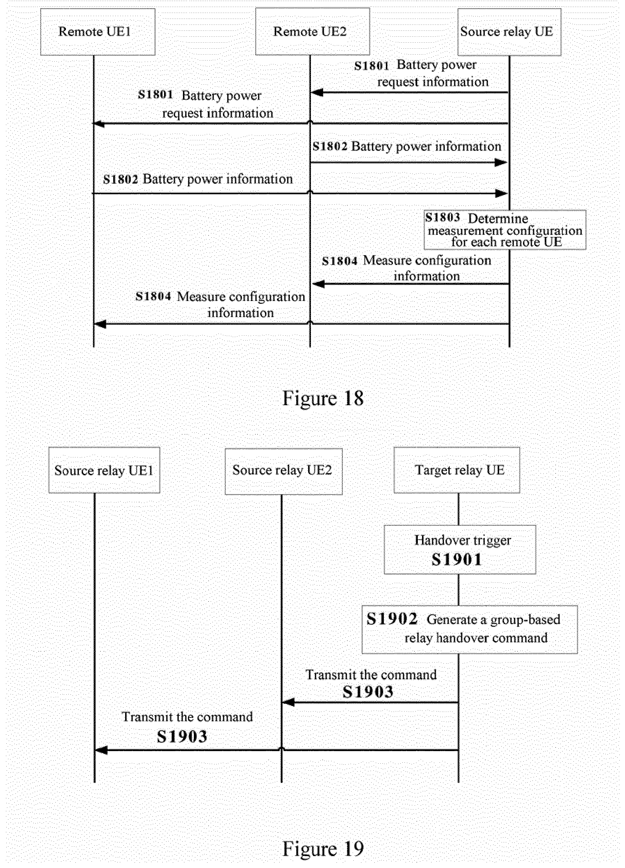

Figure 18 shows a signaling flowchart of configuring measurement configuration for a remote device according to an embodiment of the present disclosure. As shown in Figure 18, the remote UE1 and the remote UE2 communicate with the network side device via the source relay UE. In step S1801, the source relay UE transmits battery power request information to the remote UE1 and the remote UE2. In step S1802, the remote UE1 and the remote UE2 report battery power information to the source relay UE. In step S1803, the source relay UE determines a measurement configuration of each remote UE served by the source relay UE. In step S1804, the source relay UE transmits the measurement configuration information to the remote UE served by the source relay UE.

As described above, the relay device may configure measurement configuration information for a remote device in a coverage of the relay device. In this way, the remote device can measure the desired relay device without monitoring all resources, thereby reducing power consumption.

The source relay device for generating the group-based relay handover command is described in detail above. Hereinafter a target relay device for generating the group-based relay handover command is described.

### <2.2. Generate the group-based relay handover command by the target relay UE>

According to an embodiment of the present disclosure, in a case that the electronic device 200 functions as the target relay device, the transceiving circuit 220 of the electronic device 200 may transmit the group-based relay handover command to a source relay device serving remote devices in the device member list of each handover group. Preferably, the transceiving circuit 220 of the electronic device 200 may broadcast-transmit the group-based relay handover command.

According to the embodiment of the present disclosure, in a case that the electronic device functions as the target relay device, the electronic device 200 may determine the handover group, determine a target relay device for each handover group, and generate the group-based relay handover command.

### <2.2.1 Determine the handover group>

As described above, in a case that the electronic device 200 functions as the target relay device, a trigger event is detected by the electronic device 200, and the trigger event includes that the electronic device 200 receives high-layer signaling indicating that one or more remote devices need to be handed over to the electronic device 200.

According to the embodiment of the present disclosure, since the one or more remote devices need to be handed over to the electronic device 200, the electronic device 200 may group the remote devices into one handover group.

According to the embodiment of the present disclosure, in a case that the one or more remote devices correspond to different resource relay devices, the electronic device 200 may group the remote devices into multiple handover groups based on the source relay devices serving the remote devices, that is, the remote devices corresponding to the same source relay device are grouped into the same handover group.

According to the embodiment of the present disclosure, the handover group included in the group-based relay handover command generated by the electronic device 200 is the handover group to perform the relay handover. In a case that the electronic device 200 functions as the target relay device, the handover group determined by the electronic device 200 is the handover group to perform the relay handover. Therefore, the electronic device 200 may use the determined handover group as the handover group included in the command, and determines a device member list for each handover group.

### <2.2.2. Determine the target relay device>

According to the embodiment of the present disclosure, in a case that the electronic device 200 functions as the target relay device, all remote devices to perform the relay handover need to be handed over to the electronic device 200. Therefore, the electronic device 200 may determine that the target relay device for all handover groups is the electronic device 200.

As described above, the electronic device 200 may determine one or more handover groups and determine a target relay device for each handover group. Subsequently, the electronic device 200 may generate the group-based relay handover command.

According to the embodiment of the present disclosure, the transceiving circuit 220 of the electronic device 200 may transmit the group-based relay handover command to a source relay device serving remote devices included in the device member list of the handover group, such that the source relay device may forward the command to a corresponding remote device.

Figure 19 shows a signaling flowchart of generating the group-based relay handover command by the target relay device according to an embodiment of the present disclosure. As shown in Figure 19, in step S1901, the target relay UE detects a handover event, that is, the target relay UE receives high-layer signaling indicating that one or more remote devices need to be handed over to the target relay UE. The one or more remote devices correspond to the source relay UE1 and the source relay UE2. That is, a part of the remote devices originally communicate with the network side device via the source relay UE1, and another part of the remote devices originally communicate with the network side device via the source relay UE2. In step S1902, the target relay UE generates the group-based relay handover command. In step S1903, the target relay UE transmits the group-based relay handover command to the source relay UE1 and the source relay UE2.

As described above, according to the embodiment of the present disclosure, the electronic device 200 as the target relay device may generate the group-based relay handover command, including information on a device member list and a target relay device for each handover group. In this way, devices in each handover group can perform the relay handover by cooperation, thereby reducing signaling overhead and reducing a risk of signaling collision.

### <2.2.3 Determine the group header device>

According to an embodiment of the present disclosure, the processing circuit 210 may further determine a group header device for a handover group. Specifically, the information for the group header device may include identifier information on the group header device.

According to the embodiment of the present disclosure, since the group header device has great power consumption, the group header device may change periodically or non-periodically. The processing circuit 210 can determine one remote device as the group header device for the handover group based on information on all remote devices in the handover group (such as the electric quantity information and the geographical location information).

According to the embodiment of the present disclosure, the information on the group header device may be included in the group-based relay handover command. That is, the group-based relay handover command may include a device member list, information on a target relay device and information on the group header device for each handover group.

As described above, according to the embodiment of the present disclosure, the group header device for each handover group can be determined, and the group header device functions as representative of the handover group to perform the handover process. In this way, the signaling process can be simplified and the signaling overhead can be reduced greatly.

### <3. Handover performing>

According to an embodiment of the present disclosure, in a case that the source relay device or the target relay device generates and transmits the group-based relay handover command, the handover process starts.

According to the embodiment of the present disclosure, the group header device may transmit connection establishment request information to the target relay device. The connection establishment request information may include information on all devices in a device member list of a handover group where the group header device is located.

According to the embodiment of the present disclosure, the group header device may broadcast-transmit the connection establishment request information.

According to the embodiment of the present disclosure, the group header device may transmit the connection establishment request information in response to receiving or generating the group-based relay handover command.

According to the embodiment of the present disclosure, a non-group header device in the handover group may start a first timer, and performs a relay reselection operation in a case that no connection establishment response information from the target relay device is received before expiration of the first timer. That is, the non-group header device abandons the group-based relay handover operation, and may measure a desired relay device and performs the conventional relay handover operation, including transmitting connection establishment request information to the desired relay device and receiving connection establishment response information.

According to the embodiment of the present disclosure, the group header device may start a second timer after transmitting the connection establishment request information, and performs a relay reselection operation in a case that no connection establishment response information from the target relay device is received before expiration of the second timer. Optionally, the header device may start a third timer after receiving or generating the group-based relay handover command and before transmitting the connection establishment request information, and performs a relay reselection operation in a case that no connection establishment response information from the target relay device is received before expiration of the third timer. The first timer, the second timer and the third timer have different expiration time instants.

According to the embodiment of the present disclosure, the group header device and the non-group header device may receive the connection establishment response information from the target relay device. The connection establishment response information indicates that the group header device and the non-group header device are allowed to access to the target relay device.

According to the embodiment of the present disclosure, the connection establishment response information may be broadcast-transmitted by the target relay device, which carries identifier information of devices allowed to access to the target relay device.

According to the embodiment of the present disclosure, in a case that the group header device is a relay device, the connection establishment response information may be information transmitted from the target relay device to the group header device, which carries identifier information of devices allowed to access to the target relay device. The group header device may forward the connection establishment response information to other devices.

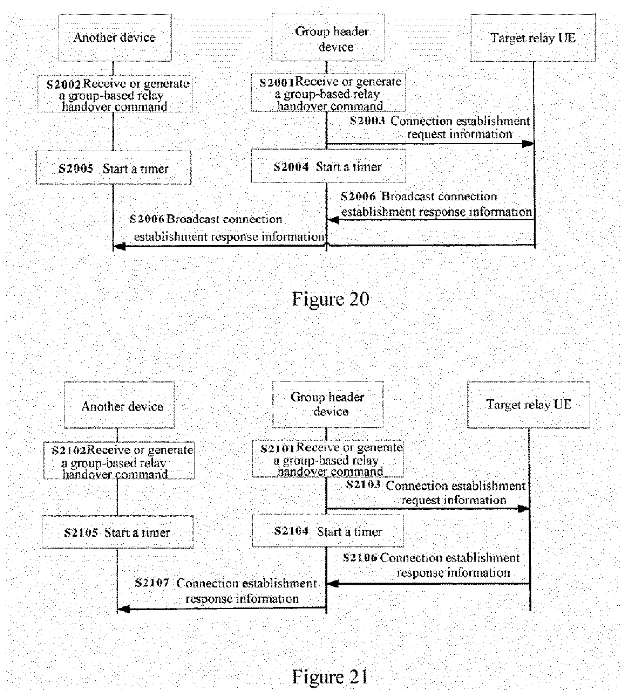

Figure 20 shows a signaling flowchart of performing the handover process according to an embodiment of the present disclosure. As shown in Figure 20, the group header device and another device as the non-group header device are located in the same handover group, and the target relay device of the handover group is the target relay UE. In step S2001, the group header device receives or generates the group-based relay handover command. In step S2003, the group header device transmits connection establishment request information to the target relay UE, which carries information on the group header device and other device. In step S2004, the group header device starts the timer. In step S2002, other device receives or generates the group-based relay handover command. In step S2005, other device starts the timer. Subsequently, in step S2006, the target relay UE broadcast-transmits the connection establishment response information, which includes information on devices allowed to access to the target relay UE. It is assumed that the group header device and other device are allowed to access to the target relay UE, the group header device and other device may receive the connection establishment response information. Figure 20 shows only a case that the handover group includes one group header device and one other device, and the handover may include multiple other devices. The operation of the multiple other devices is similar to that of the other device shown in Figure 20.

Figure 21 shows a signaling flowchart of performing a handover process according to an embodiment of the present disclosure. As shown in Figure 21, the group header device and another device as the non-group header device are located in the same handover group, and the target relay device of the handover group is the target relay UE. In step S2101, the group header device receives or generates the group-based relay handover command. In step S2103, the group header device transmits connection establishment request information to the target relay UE, which carries information on the group header device and other device. In step S2104, the group header device starts the timer. In step S2102, other device receives or generates the group-based relay handover command. In step S2105, other device starts the timer. Subsequently, in step S2106, the target relay UE transmits the connection establishment response information to the group header device, which includes information on devices allowed to access to the target relay UE. It is assumed that the group header device is the relay device and the target relay UE allows the group header device and other device to access to the target relay UE, thus in step S2107, the group header device forwards connection establishment response information to other device. Figure 21 shows only a case that the handover group includes one group header device and one other device, and the handover group may include multiple other devices. The operation of the multiple other devices is similar to that of the other device shown in Figure 21.

As mentioned above, the group header device may be a source relay device or a remote device. The handover process according to the embodiment of the present disclosure is described in detail according to the two cases hereinafter.

### <3.1 The source relay UE functioning as the group header device>

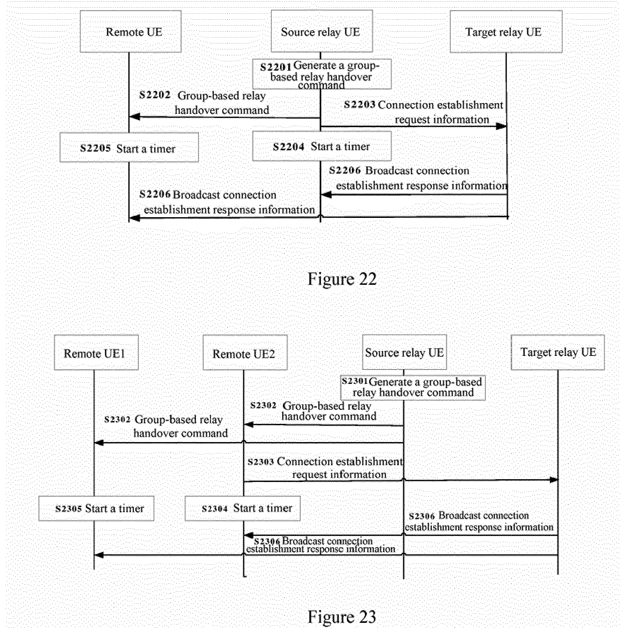

Figure 22 shows a signaling flowchart of performing a handover process according to an embodiment of the present disclosure. As shown in Figure 22, the remote UE originally communicates with the network side device via the source relay UE. In a case the group-based handover event is triggered, the source relay UE and the remote UE are located in the same handover group, the group header of the handover group is the source relay UE, and the target relay device is the target relay UE. In step S2201, the source relay UE generates a group-based relay handover command. In step S2202, the source relay UE transmits the group-based relay handover command to the remote UE. In step S2203, the source relay UE transmits connection establishment request information to the target relay UE, including information on devices in a device member list of a handover group where the source relay UE is located, for example information on the source relay UE and the remote UE. In step S2204, the source relay UE starts the timer, and performs a relay reselection operation in a case that no connection establishment response information from the target relay UE is received before expiration of the timer. In step S2205, the remote UE starts the timer in response to receiving the group-based relay handover command in step S2202, and performs a relay reselection operation in a case that no connection establishment response information from the target relay UE is received before expiration of the timer. In step S2206, the target relay UE broadcast-transmits the connection establishment response information, including information on devices allowed to access to the target relay UE. It is assumed that the target relay UE allows the source relay UE and the remote UE to access to the target relay UE, thus the source relay UE and the remote UE may receive the connection establishment response information.

In Figure 22, the group-based relay handover command is generated by the source relay UE. Practically, the group-based relay handover command may be generated by the target relay UE. In this case, the source relay UE transmits the connection establishment request information in response to receiving the group-based relay handover command.

In Figure 22, the source relay UE may broadcast-transmit the group-based relay handover command and the connection establishment request information, and the source relay UE may combine and broadcast-transmit the two types of information.

In Figure 22, the source relay UE transmits the connection establishment request information and then starts the timer. According to the embodiment of the present disclosure, the source relay UE may start the timer and then transmits the connection establishment request information, as long as different expiration time instants are set for the timer. In addition, Figure 22 shows only a case that the target relay UE broadcast-transmits the connection establishment response information. According to the embodiment of the present disclosure, the target relay UE may directly transmit the connection establishment response information to the source relay UE, and the source relay UE forwards the connection establishment response information to the remote UE.

### <3.2. The remote UE functioning as the group header device>

Figure 23 shows a signaling flowchart of performing a handover process according to an embodiment of the present disclosure. As shown in Figure 23, the remote UE1 and the remote UE2 originally communicate with the network side device via the source relay UE. In a case that the group-based relay handover event is triggered, the remote UE1 and the remote UE2 are located in the same handover group, the group header device of the handover group is the remote UE2, and the target relay device is the target relay UE. In step S2301, the source relay UE generates a group-based relay handover command. In step S2302, the source relay UE transmits the group-based relay handover command to the remote UE1 and the remote UE2. In step S2303, the remote UE2 transmits connection establishment request information to the target relay UE in response to receiving the group-based relay handover command, including information on devices in a device member list of a handover group where the remote UE2 is located, for example information on the remote UE1 and the remote UE2. In step S2304, the remote UE2 starts the timer, and performs a relay reselection operation in a case that no connection establishment response information from the target relay UE is received before expiration of the timer. In step S2305, the remote UE1 starts the timer in response to receiving the group-based relay handover command in step S2302, and performs a relay reselection operation in a case that no connection establishment response information from the target relay UE is received before expiration of the timer. In step S2306, the target relay UE broadcast-transmits the connection establishment response information, including information on devices allowed to access to the target relay UE. It is assumed that the target relay UE allows the remote UE1 and the remote UE2 to access to the target relay UE, thus the remote UE1 and the remote UE2 may receive the connection establishment response information.

Similarly, in Figure 23, the group-based relay handover command is generated by the source relay UE. Practically, the group-based relay handover command may be generated by the target relay UE. In Figure 23, the remote UE2 transmits the connection establishment request information and then starts the timer. According to the embodiment of the present disclosure, the remote UE2 may start the timer and then transmits the connection establishment request information, as long as different expiration time instants are set for the timer. In addition, Figure 23 shows only the case that the target relay UE broadcast-transmits the connection establishment response information. According to the embodiment of the present disclosure, the target relay UE may directly transmit the connection establishment response information to the source relay UE, and the source relay UE forwards the connection establishment response information to the remote UE1 and the remote UE2.

The handover process according to the embodiment of the present disclosure is described above in detail. According to the embodiment of the present disclosure, the group header device in the handover group may replace the whole handover group to perform the relay handover process, including transmitting the connection establishment request information and receiving the connection establishment response information. In this way, it is unnecessary for other device which is not the group header device to transmit the connection establishment request information, thereby reducing signaling overhead and reducing a probability of signaling collision.

### <4. A handover process of a source relay UE having a binding remote UE>

According to an embodiment of the present disclosure, the source relay device may have a binding relationship with certain remote devices. That is, regardless of a manner in which the source relay device communicates with the network side device, including communicating with the network side device directly and via another relay device, the remote device desires to communicate with the network side device via the source relay device. That is, even if the source relay device communicates with the network side device via another relay device, the remote device still desires to communicate with the network side device via the source relay device and another relay device.

For example, the source relay device is a mobile device of a user, and the remote device is a wearable device of the user. In this case, the wearable device of the user always desires to communicate with the network side device via the source relay device.

In the above case, according to the embodiment of the present disclosure, the remote device having a binding relationship with a certain source relay device may be grouped into the following handover group: a target relay device of the handover group is the source relay device.

According to the embodiment of the present disclosure, in order to simplify the handover process, the group-based relay handover process is transparent for the bound remote device. That is, the source relay device may transmit connection establishment request information to the target relay device. The connection establishment request information includes information on a source relay device and further includes information on a remote device having a binding relationship with the source relay device. The target relay device may determine whether to allow the source relay device and the remote device having the binding relationship with the source relay device to access to the target relay device. In a case that the target relay device allows the source relay device and the remote device having the binding relationship with the source relay device to access to the target relay device, the target relay device may transmit connection establishment response information to the source relay device, including information on the source relay device and information on the remote device having the binding relationship with the source relay device.

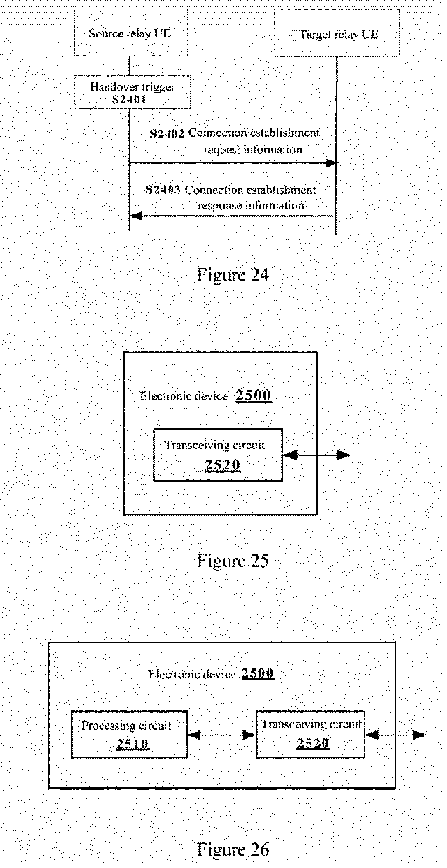

Figure 24 shows a signaling flowchart of group-based relay handover according to another embodiment of the present disclosure. As shown in Figure 24, the source relay UE has one or more remote bound remote UEs. In step S2401, the source relay UE detects the trigger event, that is, the source relay UE desires to communicate with the network side device via the target relay UE. In step S2402, the source relay UE transmits connection establishment request information to the target relay UE, which carries information on the source relay UE and the remote UE bound with the source relay UE. In step S2403, the target relay UE transmits connection establishment response information to the source relay UE, carrying information on the source relay UE and the remote UE bound with the source relay UE, which indicates that the source relay UE and the bound remote UE are allowed to access to the target relay UE.

As described above, in a case that the source relay device has the bound remote device, the handover process can be simplified according to the embodiment of the present disclosure, thereby saving signaling overhead and handover time.

### <5. Continuity of context>

The group-based relay handover process according to the embodiment of the present disclosure is described in detail above. After the group-based relay handover process, there is no connection relationship between the remote device and the source relay device. In this case, there may be a large number of contexts to be processed of the remote devices in a cache of the source relay device.

According to the embodiment of the present disclosure, the source relay device may interact with the cache of the remote device on the context information by a device to device D2D communication mode. This case adapts to the source relay device close to the remote device.

According to the embodiment of the present disclosure, if the source relay device and the remote device are handed over to the same target relay device, the source relay device may transmit the context information in the cache to the target relay device, and the target relay device forwards the context information to the remote device.

According to the embodiment of the present disclosure, the source relay device may transmit the context information in the cache to the network side device (transmitting directly or forwarding via another relay device), and the network side device forwards the context information to the remote device.

The electronic device 200 according to the embodiment of the present disclosure is described above in detail. An electronic device 2500 according to an embodiment of the present disclosure is described in detail hereinafter. The electronic device 2500 may be a remote device in the wireless communication system, that is, the electronic device 2500 may communicate with the network side device via the source relay device.

Figure 25 shows a block diagram of a structure of the electronic device 2500 according to an embodiment of the present disclosure. The electronic device 2500 may include a transceiving circuit 2520 for transmitting and receiving information.

Figure 26 shows a block diagram of a structure of the electronic device 2500 according to an embodiment of the present disclosure.

As shown in Figure 26, the electronic device 2500 may further include a processing circuit 2510. It should be noted that, the electronic device 2500 may include one or more processing circuits.

Although functional units of the processing circuit 2510 are not shown here, the processing circuit 2510 may include various discrete functional units to perform different functions and/or operations. It should be noted that, the functional unit may be a physical entity or a logical entity, and units with the same name may be implemented by the same physical entity.

According to the embodiment of the present disclosure, the transceiving circuit 2520 may receive a group-based relay handover command, which includes information on a device member list and a target relay device for a handover group where the electronic device 2500 is located.

According to the embodiment of the present disclosure, the transceiving circuit 2520 may receive information on a group header device in a handover group where the electronic device 2500 is located. The information on the group header device here may be included in the group-based relay handover command.

According to the embodiment of the present disclosure, the transceiving circuit 2520 may transmit the group-based relay handover request information to a source relay device serving the electronic device 2500.

According to the embodiment of the present disclosure, the group-based relay handover request information may include information on a desired relay device to which the electronic device 2500 desires to be handed over.

According to the embodiment of the present disclosure, the transceiving circuit 2520 may transmit connection establishment request information to a target relay device for a handover group where the electronic device 2500 is located. The connection request information includes information on devices in a device member list for the handover group where the electronic device 2500 is located.

According to the embodiment of the present disclosure, the transceiving circuit 2520 may receive connection establishment response information on a target relay device for the handover group where the electronic device 2500 is located. The connection establishment response information indicates that the electronic device 2500 is allowed to access to the target relay device.

According to the embodiment of the present disclosure, the processing circuit 2510 may start a timer, and performs a relay reselection operation in a case that no connection establishment response information from the target relay device for the handover group where the electronic device 2500 is located is received before expiration of the timer.

According to the embodiment of the present disclosure, the electronic device 2500 may function as a remote device in a wireless communication system, and may thus perform information interaction with the electronic device 200 functioning as the source relay device or the target relay device. Therefore, all embodiments of the electronic device 200 adapt to this case.

An electronic device 2700 according to an embodiment of the present disclosure is described in detail hereinafter. The electronic device 2700 may be a target relay device in a wireless communication system. That is, one or more remote devices or the source relay device desire to be handed over to the electronic device 2700.

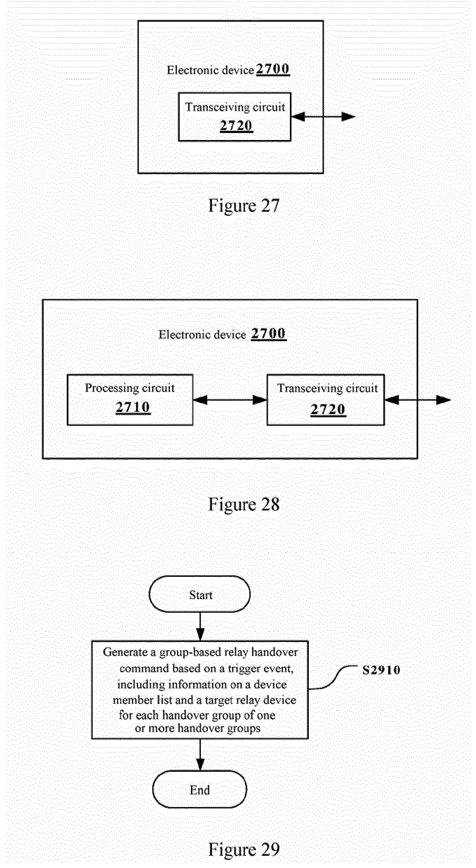

Figure 27 shows a block diagram of a structure of the electronic device 2700 according to an embodiment of the present disclosure. The electronic device 2700 may include a transceiving circuit 2720 for transmitting and receiving information.

Figure 28 shows a block diagram of a structure of the electronic device 2700 according to an embodiment of the present disclosure.

As shown in Figure 28, the electronic device 2700 may further include a processing circuit 2710. It should be noted that, the electronic device 2700 may include one or more processing circuits 2710.

Although functional units of the processing circuit 2710 are not shown here, the processing circuit 2710 may include various discrete functional units to perform different functions and/or operations. It should be noted that, the functional unit may be a physical entity or a logical entity, and units with the same name may be implemented by the same physical entity.

According to the embodiment of the present disclosure, the transceiving circuit 2720 may receive connection establishment requesting information from the source relay device or the remote device, which includes information on devices in a member device list for a handover group where the source relay device or the remote device is located. The device in the member device list desires to be handed over to the electronic device 2700.

According to the embodiment of the present disclosure, the transceiving circuit 2720 may broadcast-transmit connection establishment response information, which includes information on devices allowed to access to the electronic device 2700.

According to the embodiment of the present disclosure, the transceiving circuit 2720 may transmit connection establishment response information to the relay device allowing to access to the electronic device 2700 and the relay device serving the remote device allowing to access to the electronic device 2700. The connection establishment response information includes information on devices allowed to access to the electronic device 2700.

According to the embodiment of the present disclosure, the electronic device 2700 may function as a target device device in a wireless communication system, and may thus perform information interaction with the electronic device 200 functioning as the source relay device and the electronic device 2500 functioning as the remote device. Therefore, all embodiments of the electronic device 200 and the electronic device 2500 adapt to this case.

Subsequently, a method performed by an electronic device 200 according to an embodiment of the present disclosure is described in detail. All embodiments of the electronic device 200 adapt to the method.

Figure 29 shows a flowchart of the method performed by the electronic device 200 according to an embodiment of the present disclosure. The electronic device 200 may be a relay device in a wireless communication system, including a relay device and a target relay device.

As shown in Figure 29, in step S2910, a group-based relay handover command is generated based on a trigger event. The group-based relay handover command includes information on a device member list and a target relay device for each handover group of one or more handover groups.

Preferably, the method is performed by the source relay device in the wireless communication system, and the method further includes: transmitting a group-based relay handover command to a remote device in the device member list for each handover group.

Preferably, the method further includes: determining a group header device for each handover group, and transmitting information on the group header device to the remote device in the device member list for each handover group.

Preferably, the method further includes: receiving information on a desired relay device to which the remote device desires to be handed over from one or more remote devices served by the electronic device, and determining a target relay device for each handover group based on the information on the desired relay device for each remote device.

Preferably, the method further includes: grouping one or more remote devices into one or more handover groups based on the information on the desired relay device for each remote device.

Preferably, the method further includes: transmitting desired relay device request information to each remote device of one or more remote devices.

Preferably, the desired relay device request information includes measuring configuration information indicating time-frequency resource information on the remote device measuring the desired relay device.

Preferably, the method further includes: determining measurement configuration information based on battery power information of the remote device.

Preferably, the method further includes: performing relay reselection measuring to determine a target relay device for each handover group.

Preferably, the method further includes: transmitting connection establishment request information to a target relay device for the handover group where the electronic device is located. The connection establishment request information includes information on devices in a device member list for the handover group where the electronic device is located.

Preferably, the method further includes: combining and broadcast-transmitting the group-based relay handover command the connection establishment request information.

Preferably, the method further includes: receiving connection establishment response information from a target relay device for the handover group where the electronic device is located, and the connection establishment response information indicates that the electronic device is allowed to access to the target relay device.

Preferably, the method further includes: starting a timer, and performing a relay reselection operation in a case that no connection establishment response information from the target relay device for the handover group where the electronic device is located is received before expiration of the timer.

Preferably, the trigger event includes one or more of the following: link quality between the electronic device and one or more remote devices served by the electronic device is less than a first threshold; link quality between the electronic device and the network side device is less than a second threshold; and the electronic device receives high-layer signaling indicating one or more remote devices served by the electronic device need to perform relay handover or indicating that it is required to provide a relay service for the electronic device.

Preferably, the method may be performed by the target relay device in the wireless communication system, and the method further includes: transmitting a group-based relay handover command to the source relay device serving the remote device in the device member list for each handover group.

Preferably, the method further includes: determining a group header device for each handover group, and transmitting information on the group header device to the source relay device serving the remote devices in the device member list for each handover group.

Preferably, the method further includes: receiving connection establishment request information from the group header device for each handover group, where the connection establishment request information includes information on devices in the device member list of the handover group; and transmitting connection establishment response information including information on devices allowed to access to the electronic device.

Preferably, the trigger event includes that: the electronic device receives high-layer signaling indicating that one or more remote devices are to be handed over to the electronic device.

The method performed by the electronic device 200 according to the embodiment of the present disclosure has been described in detail during the process of describing the electronic device 200, which is not repeated here.

Hereinafter, a method performed by the electronic device 2500 according to an embodiment of the present disclosure is described in detail. The electronic device 2500 here may be a remote device in the wireless communication system. Therefore, all embodiments of the electronic device 2500 adapt to the method.

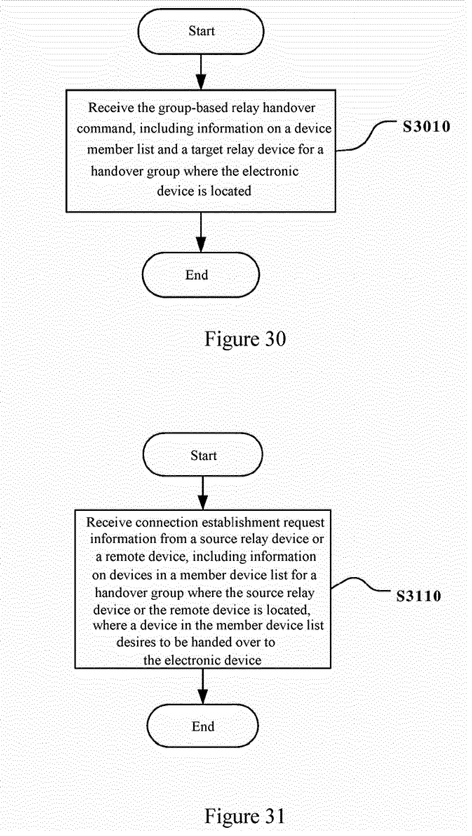

Figure 30 shows a flowchart of the method performed by the electronic device 2500 according to an embodiment of the present disclosure.

As shown in Figure 30, in step S3010, a group-based relay handover command is received. The group-based relay handover command includes information on a device member list and a target relay device for a handover group where the electronic device 2500 is located.

Preferably, the method further includes: receiving information on a group header device for the handover group where the electronic device 2500 is located.

Preferably, the method further includes: transmitting group-based relay handover request information to a source relay device serving the electronic device 2500.

Preferably, the group-based relay handover request information includes information on a desired relay device to which the electronic device 2500 desires to be handed over.

Preferably, the method further includes: transmitting connection establishment request information to the target relay device for the handover group where the electronic device 2500 is located. The connection establishment request information includes information on devices in a device member list of a handover group where the electronic device 2500 is located.

Preferably, the method further includes: receiving connection establishment response information from a target relay device for the handover group where the electronic device 2500 is located. The connection establishment response information indicates that the electronic device 2500 is allowed to access to the target relay device.

Preferably, the method further includes: starting a timer, and performing a relay reselection operation in a case that no connection establishment response information from a target relay device for the handover group where the electronic device 2500 is located is received before expiration of the timer.

The method performed by the electronic device 2500 according to the embodiment of the present disclosure has been described in detail during the process of describing the electronic device 200 and the electronic device 2500, which is not repeated here.

A method performed by the electronic device 2700 according to an embodiment of the present disclosure is described in detail hereinafter. The electronic device 2700 here may be a relay device in the wireless communication system, specifically the target relay device. Therefore, all embodiments of the electronic device 2700 adapt to the method.

Figure 31 shows a flowchart of a method performed by an electronic device for a cognitive radio system according to an embodiment of the present disclosure.

As shown in Figure 31, in step S3110, connection establishment request information is received from a source relay device or a remote device. The connection establishment request information includes information on devices in a device member list for each handover group where the source relay device or the remote device is located. The device in the member device list desires to be handed over to the electronic device 2700.

Preferably, the method further includes: broadcast-transmitting connection establishment response information including information on devices allowed to access to the electronic device 2700.

The method performed by the electronic device 2700 according to the embodiment of the present disclosure has been described in detail during the process of describing the electronic device 2700, which is not repeated here.

### <Application example>

The technology according to the present disclosure may be applied to various types of products. For example, the network side device may be implemented as any type of evolution Node B (eNB), such as a macro eNB and a small eNB. The small eNB may be an eNB of a cell with a coverage less than that of a macro cell, such as a pico-eNB, a micro-eNB and a household (femto) eNB. Alternatively, the base station may be implemented as any other types of base stations, such as a NodeB and a base transceiver station (BTS). The base station may include: a body configured to control wireless communication (also referred to as a base station device); and one or more remote radio head-ends (RRHs) arranged at different places from the body. In addition, various types of terminals described in the following may function as a base station to operate by performing functions of the base station temporarily or in a semi-persistent manner.

For example, the terminal device as the remote device and the relay device may be implemented as a mobile terminal (such as a smart phone, a tablet personal computer (PC), a notebook PC, a portable game terminal and a portable/dongle mobile router and a digital camera) or a vehicle-mounted terminal (such as an automobile navigation device). The UE may be further implemented as a terminal performing machine to machine (M2M) communication (also referred to as a MTC terminal). In addition, the terminal device may be a wireless communication module installed on each of the above terminals (such as an integrated circuit module including a single wafer). Particularly, the remote device may be implemented as a wearable device.

### [Application example on a base station]

### (First application example)

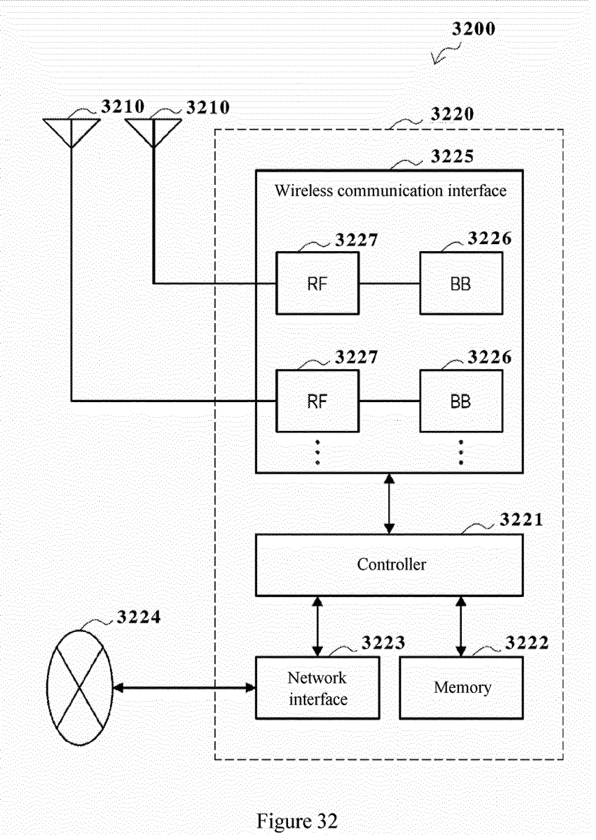

Figure 32 is a block diagram showing a first example of a schematic configuration of an eNB to which the technology of the present disclosure may be applied. An eNB 3200 includes one or more antennas 3210 and a base station device 3220. The base station device 3220 and each antenna 3210 may be connected to each other via an RF cable.

Each of the antennas 3210 includes a single or multiple antenna elements (such as multiple antenna elements included in a multiple-input multiple-output (MIMO) antenna) and is used for the base station device 3220 to transmit and receive a wireless signal. As shown in Figure 32, the eNB 3200 may include multiple antennas 3210. For example, the multiple antennas 3210 may be compatible with multiple frequency bands used by the eNB 3200. Although Figure 32 shows an example in which the eNB 3200 includes multiple antennas 3210, the eNB 3200 may include a single antenna 3210.

The base station device 3220 includes a controller 3221, a memory 3222, a network interface 3223 and a wireless communication interface 3225.

The controller 3221 may be a CPU or DSP for example and controls various types of functions of higher layers of the base station device 3220. For example, the controller 3221 generates a data packet according to data in a signal processed by the wireless communication interface 3225, and transfers the generated packet via the network interface 3223. The controller 3221 may bundle data from multiple baseband processors to generate a bundle packet and transfers the generated bundle packet. The controller 3221 may have logic functions to perform the following control: such as wireless resource control, wireless bearer control, mobility management, admission control and schedule. The control may be implemented in conjunction with an eNB or a core network node nearby. The memory 3222 includes an RAM and an ROM and stores programs performed by the controller 3221 and various types of control data (such as a terminal list, transmission power data and schedule data).

The network interface 3223 is a communication interface connecting a base station device 3220 to a core network 3224. The controller 3221 may communicate with a core network node or another eNB via the network interface 3223. In this case, the eNB 3200 may be connected to the core network node or other eNB via a logic interface (such as an S1 interface and an X2 interface). The network interface 3223 may also be a wired communication interface or a wireless communication interface for a wireless backhaul line. If the network interface 3223 is a wireless communication interface, the network interface 1823 may use a higher frequency band for wireless communication as compared with a frequency band used by the wireless communication interface 3225.

The wireless communication interface 3225 supports any cellular communication scheme (such as Long Term Evolution and LTE-advanced), and provide wireless connection to a terminal in a cell of the eNB 3200 via an antenna 3210. The wireless communication interface 3225 may generally include a baseband (BB) processor 3226 and an RF circuit 3227. The BB processor 3226 may perform for example encoding/decoding, modulating/demodulating and multiplexing and de-multiplexing and perform various types of signal processing of layers (such as L1, medium access control (MAC), radio link control (RLC) and packet data convergence protocol (PDCP). Instead of a controller 3221, the BB processor 3226 may have a part or all of the logic functions described above. The BB processor 3226 may be a memory storing communication control programs, or a module including a processor configured to perform programs and related circuits. Updating programs may change functions of the BB processor 3226. The module may be a card or a blade inserted to a slot of the base station device 3220. Alternatively, the module may also be a chip installed on the card or the blade. Meanwhile, an RF circuit 3227 may include for example a mixer, a filter and an amplifier, and transmits and receives a wireless signal via the antenna 3210.

As shown in Figure 32, the wireless communication interface 3225 may include multiple BB processors 3226. For example, the multiple BB processors 3226 may be compatible with multiple frequency bands used by the eNB 3200. As shown in Figure 32, the wireless communication interface 3225 may include multiple RF circuits 3227. For example, the multiple RF circuits 3227 may be compatible with multiple antenna elements. Although Figure 32 shows an example in which the wireless communication interface 3225 includes multiple BB processors 3226 and multiple RF circuits 3227, the wireless communication interface 3225 may include a single BB processor 3226 or a single RF circuit 3227.

### (Second application example)

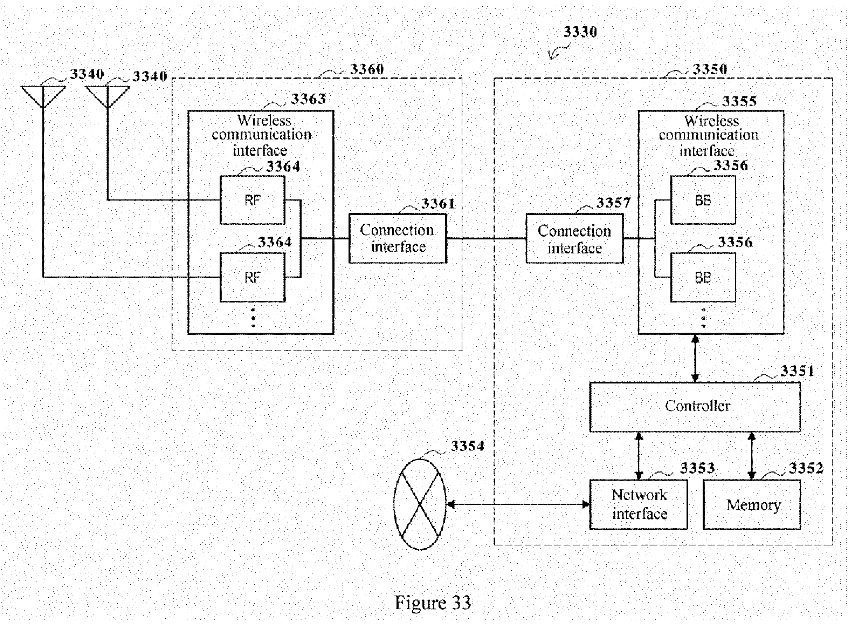

Figure 33 is a block diagram showing a second example of the schematic configuration of the eNB to which the technology of the present disclosure may be applied. An eNB 3330 includes one or more antennas 3340, a base station device 3350 and an RRH 3360. The RRH 3360 and each antenna 3340 may be connected to each other via an RF cable. The base station device 3350 and the RRH 3360 may be connected to each other via a high speed line such as an optical fiber cable.

Each of the antennas 3340 includes a single or multiple antenna elements (such as multiple antenna elements included in the MIMO antenna) and is used for the RRH 3360 to transmit and receive a wireless signal. As shown in Figure 33, the eNB 3330 may include multiple antennas 3340. For example, the multiple antennas 3340 may be compatible with multiple frequency bands used by the eNB 3330. Although Figure 33 shows an example in which the eNB 3330 includes multiple antennas 3340, the eNB 3330 may include a single antenna 3340.

The base station device 3350 includes a controller 3351, a memory 3352, a network interface 3353, a wireless communication interface 3355 and a connection interface 3357. The controller 3351, the memory 3352 and the network interface 3353 are the same as the controller 3321, the memory 3322 and the network interface 3323 described with reference to Figure 33.

A wireless communication interface 3355 supports any cellular communication scheme (such as LTE and LTE-advanced), and provide wireless communication with a terminal in a sector corresponding to the RRH 3360 via the RRH 3360 and the antenna 3340. The wireless communication interface 3355 may generally include a BB processor 3356 for example. In addition to that the BB processor 3356 is connected to an RF circuit 3364 of the RRH 3360 via the connection interface 3357, the BB processor 3356 is the same as the BB processor 3226 described with reference to Figure 32. As shown in Figure 33, the wireless communication interface 3355 may include multiple BB processors 3356. For example, the multiple BB processors 3356 may be compatible with multiple frequency bands used by the eNB 3330. Although Figure 33 shows an example in which the wireless communication interface 3355 includes multiple BB processors 3356, the wireless communication interface 3355 may include a single BB processor 3356.

The connection interface 3357 is an interface configured to connect the base station device 3350 (the wireless communication interface 3355) to the RRH 3360. The connection interface 3357 may be a communication module for communication in the high speed line described above which connects the base station device 3350 (the wireless communication interface 3355) to the RRH 3360.

The RRH 3360 includes a connection interface 3361 and a wireless communication interface 3363.

The connection interface 3361 is an interface configured to connect the RRH 3360 (the wireless communication interface 3363) to the base station device 3350. The connection interface 3361 may be a communication module for performing communication via the high speed line described above.

The wireless communication interface 3363 transmits and receives a wireless signal via the antenna 3340. The wireless communication interface 3363 may generally include an RF circuit 3364 for example. The RF circuit 3364 may include for example a mixer, a filter and an amplifier, and transmits and receives a wireless signal via the antenna 3340. As shown in Figure 33, the wireless communication interface 3363 may include multiple RF circuits 3364. For example, the multiple RF circuits 3364 may support multiple antenna elements. Although Figure 33 shows an example in which the wireless communication interface 3363 includes multiple RF circuits 3364, the wireless communication interface 3363 may include a single RF circuit 3364.

### (Application example on a terminal device)

### (First application example)

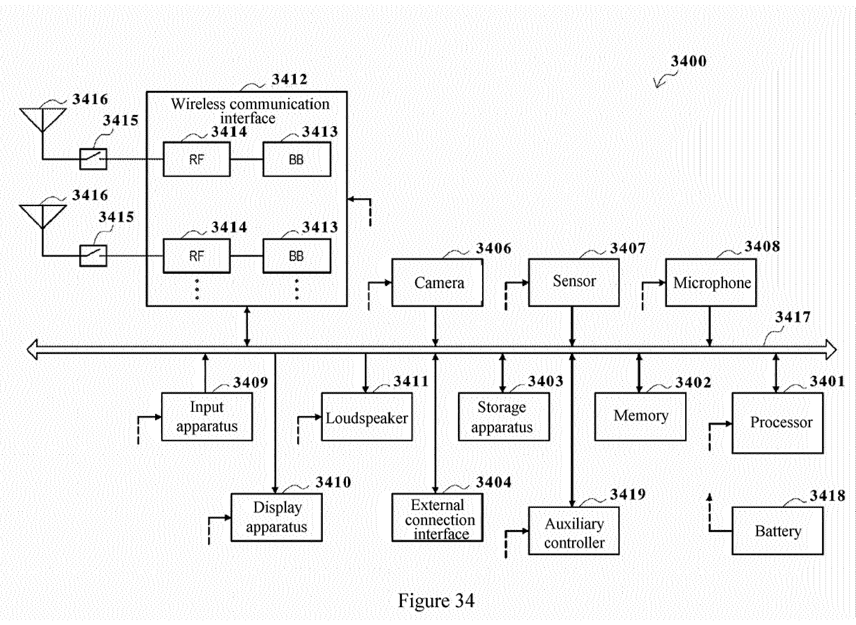

Figure 34 is a block diagram showing an example of a schematic configuration of a smart phone 3400 to which the technology of the present disclosure may be applied. The smart phone 3400 includes: a processor 3401, a memory 3402, a storage apparatus 34203, an external connection interface 3404, a camera 3406, a sensor 3407, a microphone 3408, an input apparatus 3409, a display apparatus 3410, a loudspeaker 3411, a wireless communication interface 3412, one or more antenna switches 3415, one or more antennas 3416, a bus 3417, a battery 3418 and an auxiliary controller 3419.

The processor 3401 may be for example a CPU or a system on chip (SoC), and control functions of an application layer and other layers of the smart phone 3400. The memory 3402 includes an RAM and an ROM, and stores programs executed by the processor 3401 and data. The storage apparatus 3403 may include a storage medium, such as a semiconductor memory and a hard disk. The external connection interface 3404 is an interface configured to connect an external apparatus (such as a memory card and a universal serial bus (USB) device) to the smart phone 3400.

The camera 3406 includes an image sensor (such as a charge coupled device (CCD) and a complementary metal oxide semiconductor (CMOS)) and generates a captured image. The sensor 3407 may include a set of sensors, such as a measurement sensor, a gyroscope sensor, a geomagnetic sensor and an acceleration sensor. The microphone 3408 converts sound inputted into the smart phone 3400 into an audio signal. The input apparatus 3409 includes for example a touch sensor configured to detect touch on a screen of the display apparatus 3410, a keypad, a keyboard, a button or a switch, and receives an operation or information inputted from a user. The display apparatus 3410 includes a screen (such as a liquid crystal display (LCD) and an organic light emitting diode (OLED) display), and displays an output image of the smart phone 3400. The loudspeaker 3411 converts the audio signal outputted from the smart phone 3400 into sound.

The wireless communication interface 3412 supports any cellular communication scheme (such as LTE and LTE-advanced), and performs wireless communication. The wireless communication interface 3412 may generally include for example a BB processor 3413 and an RF circuit 3414. The BB processor 3413 may perform encoding/decoding, modulating/demodulating and multiplexing/de-multiplexing for example, and perform various types of signal processing for wireless communication. Meanwhile, the RF circuit 3414 may include for example a mixer, a filter and an amplifier, and transmits and receives a wireless signal via an antenna 3416. The wireless communication interface 3412 may be a chip module on which a BB processor 3413 and the RF circuit 3414 are integrated. As shown in Figure 34, the wireless communication interface 3412 may include multiple BB processors 3413 and multiple RF circuits 3414. Although Figure 34 shows an example in which the wireless communication interface 3412 includes multiple BB processors 3413 and multiple RF circuits 3414, the wireless communication interface 3412 may include a single BB processor 3413 or a single RF circuit 3414.

In addition to the cellular communication scheme, the wireless communication interface 3412 may support other types of wireless communication schemes, such as a short distance wireless communication scheme, a near field communication scheme and a wireless local area network (LAN) scheme. In this case, the wireless communication interface 3412 may include a BB processor 3413 and an RF circuit 3414 for each type of wireless communication scheme.

Each of the wireless switches 3415 switches a connection destination of the antenna 3416 between multiple circuits (for example circuits for different wireless communication schemes) included in the wireless communication interface 3412.

Each of the antennas 3416 includes a single or multiple antenna elements (such as multiple antenna elements included in the MIMO antenna), and is used for the wireless communication interface 3412 to transmit and receive a wireless signal. As shown in Figure 34, the smart phone 3400 may include multiple antennas 3416. Although Figure 34 shows an example in which the smart phone 3400 includes multiple antennas 3416, the smart phone 3400 may include a single antenna 3416.

In addition, the smart phone 3400 may include an antenna 3416 for each type of wireless communication scheme. In this case, the antenna switch 3415 may be omitted from the configuration of the smart phone 3400.

The bus 3417 connects the processor 3401, the memory 3402, the storage apparatus 3403, the external connection interface 3404, the camera 3406, the sensor 3407, the microphone 3408, the input apparatus 3409, the display apparatus 3410, the loudspeaker 3411, the wireless communication interface 3412 and the auxiliary controller 3419 with each other. The battery 3418 supplies power for blocks in the smart phone 3400 shown in Figure 34 via a feeder which is indicated partially as a dashed line in the figure. The auxiliary controller 3419 controls a minimum necessary function of the smart phone 3400 in a sleeping mode, for example.

In the smart phone 3400 shown in Figure 34, the processing circuit 210 described with reference to Figure 2, the processing circuit 2510 described with reference to Figure 26 and the processing circuit 2710 described with reference to Figure 28, may be implemented by the processor 3401 or the auxiliary controller 3419. At least a part of the functions may be implemented by the processor 3401 or the auxiliary controller 3419. For example, the processor 3401 or the auxiliary controller 3419 may perform the function of generating the group-based relay handover command by executing instructions stored in the memory 3402 or the storage apparatus 3403.

### (Second application example)

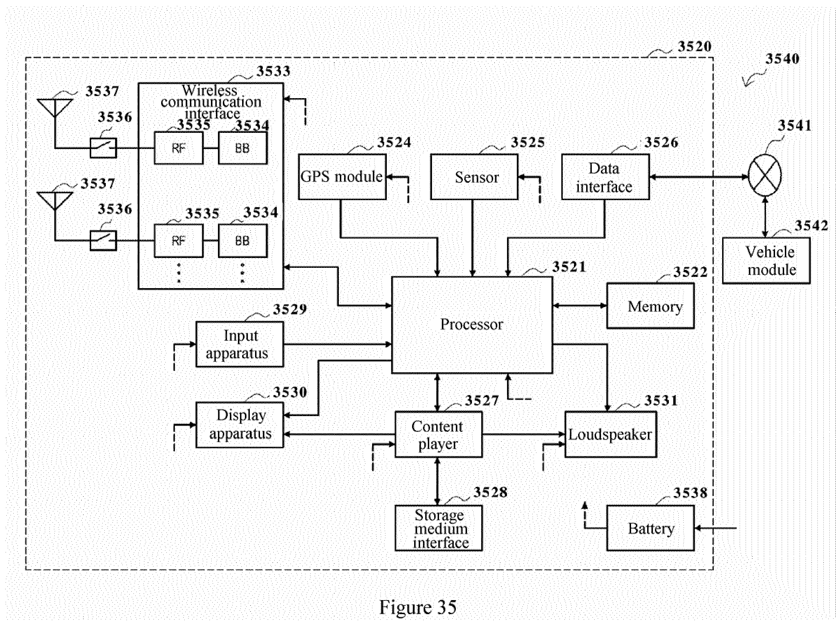

Figure 35 is a block diagram showing an example of a schematic configuration of an automobile navigation device 3520 to which the technology of the present disclosure may be applied. The automobile navigation device 3520 includes a processor 3521, a memory 3522, a global positioning system (GPS) module 3524, a sensor 3525, a data interface 3526, a content player 3527, a storage medium interface 3528, an input apparatus 3529, a display apparatus 3530, a loudspeaker 3531, a wireless communication interface 3533, one or more antenna switches 3536, one or more antennas 3537 and a battery 3538.

The processor 3521 may be a CPU or an SoC, and controls a navigation function and other functions of the automobile navigation device 3520. The memory 3522 includes an RAM and an ROM, and stores programs executed by the processor 3521 and data.

The GPS module 3524 measures a position of the automobile navigation device 3520 (such as a latitude, a longitude and a height) by using a GPS signal received from a GPS satellite. The sensor 3525 may include a set of sensors, such as a gyroscope sensor, a geomagnetic sensor and an air pressure sensor. The data interface 3526 is connected to a vehicle network 3541 for example through a terminal not shown, and acquires data generated by the vehicle (such as vehicle speed data).

The content player 3527 reproduces contents stored in a storage medium (such as a CD and a DVD), and the storage medium is inserted into the storage medium interface 3528. The input apparatus 3529 includes for example a touch sensor configured to detect touch on a screen of the display apparatus 3530, a button or a switch, and receives an operation or information inputted from a user. The display apparatus 3530 includes a screen of an LCD or OLED display for example, and displays an image with a navigation function or the reproduced content. The loudspeaker 3531 outputs a sound with a navigation function or the reproduced content.

The wireless communication interface 3533 supports any cellular communication scheme (such as LTE and LTE-advanced), and performs wireless communication. The wireless communication interface 3533 may generally include a BB processor 3534 and an RF circuit 3535 for example. The BB processor 3534 may perform encoding/decoding, modulating/demodulating and multiplexing/de-multiplexing, and perform various types of signal processing for wireless communication. Meanwhile, the RF circuit 3535 may include for example a mixer, a filter and an amplifier, and transmits and receives a wireless signal via the antenna 3537. The wireless communication interface 3533 may also be a chip module on which the BB processor 3534 and the RF circuit 3535 are integrated. As shown in Figure 35, the wireless communication interface 3533 may include multiple BB processors 3534 and multiple RF circuits 3535. Although Figure 35 shows an example in which the wireless communication interface 3533 includes multiple BB processors 3534 and multiple RF circuits 3535, the wireless communication interface 3533 may include a single BB processor 3534 or a single RF circuit 3535.

In addition to the cellular communication scheme, the wireless communication interface 3533 may support other types of wireless communication schemes, such as a short distance wireless communication scheme, a near field communication scheme and a wireless LAN scheme. In this case, for each type of wireless communication scheme, the wireless communication interface 3533 may include the BB processor 3534 and the RF circuit 3535.

Each of the antenna switches 3536 switches a connection destination of the antenna 3537 between multiple circuits (such as circuits for different wireless communication schemes) included in the wireless communication interface 3533.

Each of the antennas 3537 includes a single or multiple antenna elements (such as multiple antenna elements included in the MIMO antenna), and is used for the wireless communication interface 3533 to transmit and receive a wireless signal. As shown in Figure 35, the automobile navigation device 3520 may include multiple antennas 3537. Although Figure 35 shows an example in which the automobile navigation device 3520 includes multiple antennas 3537, the automobile navigation device 3520 may include a single antenna 3537.

In addition, the automobile navigation device 3520 may include the antenna 3537 for each type of wireless communication scheme. In this case, the antenna switch 3536 may be omitted from the configuration of the automobile navigation device 3520.

The battery 3538 supplies power for blocks in the automobile navigation device 3520 shown in Figure 35 via a feeder which is indicated partially as a dashed line in the figure. The battery 3538 accumulates power provided by the vehicle.

In the automobile navigation device 3520 shown in Figure 35, the processing circuit 210 described with reference to Figure 2, the processing circuit 2510 described with reference to Figure 26 and the processing circuit described with reference to Figure 28, may be implemented by the processor 3521. At least a part of the functions may be implemented by the processor 3521. For example, the processor 3521 may perform the function of generating the group-based relay handover command by executing instructions stored in the memory 3522.

The technology of the present disclosure may be implemented as a vehicle-mounted system (or a vehicle) 3540 including one or more of the automobile navigation device 3520, the vehicle network 3541 and a vehicle module 3542. The vehicle module 3542 generates vehicle data (such as a vehicle speed, an engine speed and fault information), and outputs the generated data to the vehicle network 3541.

In the system and method according to the present disclosure, obviously, components or steps may be decomposed and/or recombined. The decomposition and/or recombination should be regarded as equivalent solutions of the present disclosure. In addition, steps in the series of processing described above may be performed naturally in an order of description and in a time order, and is not necessarily performed in the time order. Some steps may be performed in parallel or independently from each other.

Although the embodiments of the present disclosure are described in detail in conjunction with the drawings above, it should be understood that the embodiments described above are only used to illustrate the present disclosure and are not intended to limit the present disclosure. For those skilled in the art, various types of changes and modifications may be made to the embodiments without departing from the scope of the present disclosure. Therefore, the scope of the present disclosure is defined by only the appended claims.

## Claims

1. An electronic device (200), comprising a processing circuit (210) configured to generate a group-based relay handover command based on a trigger event, the group-based relay handover command comprising information on a device member list and a target relay device for each handover group of one or more handover groups to enable handover from a source relay device to the target relay device to be performed on devices in the device member list of each handover group as a whole,
wherein the electronic equipment serves as the source relay device in a wireless communication system,
wherein the electronic device further comprises a transceiving circuit (220) configured to transmit the group-based relay handover command to a remote device in the device member list for each handover group, and
wherein the processing circuit is further configured to determine a group header device for each handover group, and the transceiving circuit is further configured to transmit information on the group header device to the remote device in the device member list for each handover group, the group header device of each handover group functioning as representative of the handover group to perform the handover process.

2. The electronic device according to claim 1, wherein the transceiving circuit is further configured to receive, from one or more remote devices served by the electronic device, information on a desired relay device to which the remote device desires to be handed over, and the processing circuit is further configured to determine the target relay device for each handover group based on the information on the desired relay device for each remote device.

3. The electronic device according to claim 2, wherein the processing circuit is further configured to group the one or more remote devices into the one or more handover groups based on the information on the desired relay device for each remote device.

4. The electronic device according to claim 2, wherein the transceiving circuit is further configured to transmit desired relay device request information to each remote device of the one or more remote devices.

5. The electronic device according to claim 4, wherein the desired relay device request information comprises measurement configuration information for identifying time-frequency resource information for the remote device measuring the desired relay device, and
wherein the processing circuit is further configured to determine the measurement configuration information according to battery power information of the remote device.

6. An electronic device (2500), comprising a transceiving circuit (2520) configured to receive a group-based relay handover command, the group-based relay handover command comprising information on a device member list and a target relay device for a handover group in which the electronic device is located to enable handover from a source relay device to the target relay device to be performed on devices in the device member list of each handover group as a whole;
wherein the transceiving circuit is further configured to receive information on a group header device for the handover group in which the electronic device is located, the group header device functioning as representative of the handover group in which the electronic device is located to perform the handover process.

7. The electronic device according to claim 6, wherein the transceiving circuit is further configured to transmit connection establishment requirement information to the target relay device for the handover group in which the electronic device is located, the connection establishment requirement information comprising information on a device in the device member list for the handover group in which the electronic device is located, or
wherein the transceiving circuit is further configured to receive connection establishment response information from the target relay device for the handover group in which the electronic device is located, the connection establishment response information representing that the electronic device is allowed to access to the target relay device, or
wherein the electronic device further comprises: a processing circuit configured to start a timer, and perform a relay reselection operation when no connection establishment response information from the target relay device for the handover group in which the electronic device is located is received before expiration of the timer.

## Patentansprüche

1. Elektronische Vorrichtung (200), die eine Verarbeitungsschaltung (210) aufweist, die so ausgebildet ist, dass sie einen gruppenbasierten Relay-Handover-Befehl auf der Grundlage eines Auslöseereignisses erzeugt, wobei der gruppenbasierte Relay-Handover-Befehl Informationen über eine Vorrichtungsmitgliederliste und eine Ziel-Relay-Vorrichtung für jede Handover-Gruppe einer oder mehrerer Handover-Gruppen umfasst, um zu ermöglichen, dass ein Handover von einer Quell-Relay-Vorrichtung zu der Ziel-Relay-Vorrichtung an Vorrichtungen in der Vorrichtungsmitgliederliste jeder Handover-Gruppe als Ganzes durchgeführt wird,
wobei die elektronische Ausrüstung als Quell-Relay-Vorrichtung in einem Drahtloskommunikationssystem dient,
wobei die elektronische Vorrichtung ferner eine Sende-/Empfangsschaltung (220) aufweist, die so ausgebildet ist, dass sie den gruppenbasierten Relay-Handover-Befehl an eine Remote-Vorrichtung in der Vorrichtungsmitgliederliste für jede Handover-Gruppe sendet, und
wobei die Verarbeitungsschaltung ferner so ausgebildet ist, dass sie eine Gruppen-Header-Vorrichtung für jede Handover-Gruppe bestimmt, und die Sende-/Empfangsschaltung ferner so ausgebildet ist, dass sie Informationen über die Gruppen-Header-Vorrichtung an die Remote-Vorrichtung in der Vorrichtungsmitgliederliste für jede Handover-Gruppe überträgt, wobei die Gruppen-Header-Vorrichtung jeder Handover-Gruppe als Repräsentant der Handover-Gruppe fungiert, um den Handover-Vorgang durchzuführen.

2. Elektronische Vorrichtung gemäß Anspruch 1, wobei die Sende-/Empfangsschaltung ferner so ausgebildet ist, dass sie von einer oder mehreren Remote-Vorrichtungen, die von der elektronischen Vorrichtung bedient werden, Informationen über eine gewünschte Relay-Vorrichtung empfängt, an die die Remote-Vorrichtung übergeben werden möchte, und die Verarbeitungsschaltung ferner so ausgebildet ist, dass sie die Ziel-Relay-Vorrichtung für jede Handover-Gruppe auf der Grundlage der Informationen über die gewünschte Relay-Vorrichtung für jede Remote-Vorrichtung bestimmt.

3. Elektronische Vorrichtung gemäß Anspruch 2, wobei die Verarbeitungsschaltung ferner so ausgebildet ist, dass sie die eine oder die mehreren Remote-Vorrichtungen auf der Grundlage der Informationen über die gewünschte Relay-Vorrichtung für jede Remote-Vorrichtung in die eine oder die mehreren Handover-Gruppen einteilt.

4. Elektronische Vorrichtung gemäß Anspruch 2, wobei die Sende-/Empfangsschaltung ferner so ausgebildet ist, dass sie gewünschte Relay-Vorrichtungs-Anforderungsinformationen an jede Remote-Vorrichtung der einen oder der mehreren Remote-Vorrichtungen sendet.

5. Elektronische Vorrichtung gemäß Anspruch 4, wobei die Anforderungsinformationen für die gewünschte Relay-Vorrichtung Messkonfigurationsinformationen zur Identifizierung von Zeit-Frequenz-Ressourceninformationen für die Remote-Vorrichtung, die die gewünschte Relay-Vorrichtung misst, beinhalten, und wobei die Verarbeitungsschaltung ferner so ausgebildet ist, dass sie die Messkonfigurationsinformationen entsprechend den Batteriestrominformationen der Remote-Vorrichtung bestimmt.

6. Elektronische Vorrichtung (2500), die eine Sende-/Empfangsschaltung (2520) aufweist, die so ausgebildet ist, dass sie einen gruppenbasierten Relay-Handover-Befehl empfängt, wobei der gruppenbasierte Relay-Handover-Befehl Informationen über eine Vorrichtungsmitgliederliste und eine Ziel-Relay-Vorrichtung für eine Handover-Gruppe umfasst, in der sich die elektronische Vorrichtung befindet, um zu ermöglichen, dass ein Handover von einer Quell-Relay-Vorrichtung zu der Ziel-Relay-Vorrichtung an Vorrichtungen in der Vorrichtungsmitgliederliste jeder Handover-Gruppe als Ganzes durchgeführt wird;
wobei die Sende-/Empfangsschaltung ferner so ausgebildet ist, dass sie Informationen über eine Gruppen-Header-Vorrichtung für die Handover-Gruppe, in der sich die elektronische Vorrichtung befindet, empfängt, wobei die Gruppen-Header-Vorrichtung als Repräsentant der Handover-Gruppe fungiert, in der sich die elektronische Vorrichtung befindet, um den Handover-Vorgang durchzuführen.

7. Elektronische Vorrichtung gemäß Anspruch 6, wobei die Sende-/Empfangsschaltung ferner so ausgebildet ist, dass sie Verbindungsaufbau-Anforderungsinformationen an die Ziel-Relay-Vorrichtung für die Handover-Gruppe, in der sich die elektronische Vorrichtung befindet, sendet, wobei die Verbindungsaufbau-Anforderungsinformationen Informationen über eine Vorrichtung in der Vorrichtungsmitgliederliste für die Handover-Gruppe, in der sich die elektronische Vorrichtung befindet, enthalten, oder
wobei die Sende-/Empfangsschaltung ferner so ausgebildet ist, dass sie Verbindungsaufbau-Antwortinformationen von der Ziel-Relay-Vorrichtung für die Handover-Gruppe, in der sich die elektronische Vorrichtung befindet, empfängt, wobei die Verbindungsaufbau-Antwortinformationen repräsentieren, dass der elektronischen Vorrichtung der Zugriff auf die Ziel-Relay-Vorrichtung erlaubt ist, oder
wobei die elektronische Vorrichtung ferner Folgendes aufweist:
eine Verarbeitungsschaltung, die so ausgebildet ist, dass sie einen Timer startet und einen Relay-Neuwahlvorgang durchführt, wenn vor Ablauf des Timers keine Verbindungsaufbau-Antwortinformation von der Ziel-Relay-Vorrichtung für die Handover-Gruppe, in der sich die elektronische Vorrichtung befindet, empfangen wird.

## Revendications

1. Dispositif électronique (200), comportant un circuit de traitement (210) configuré de façon à générer une commande de transfert à relais basée sur groupe basée sur un événement de déclenchement, cette commande de transfert à relais basée sur groupe comprenant des informations sur une liste d'éléments dispositifs et sur un dispositif relais cible pour chaque groupe de transfert d'un ou de plusieurs groupes de transfert afin de permettre l'exécution du transfert d'un dispositif relais source au dispositif relais cible sur des dispositifs de la liste d'éléments dispositifs de chaque groupe de transfert dans son ensemble,
l'équipement électronique servant de dispositif relais source dans un système de communication sans fil,
le dispositif électronique comprenant en outre un circuit de transmission-réception (220) configuré de façon à transmettre la commande de transfert à relais basée sur groupe à un dispositif distant dans la liste d'éléments dispositifs pour chaque groupe de transfert, et
le circuit de traitement étant configuré en outre de façon à déterminer un dispositif d'en-tête de groupe pour chaque groupe de transfert, et le circuit de transmission-réception étant configuré en outre de façon à transmettre des informations sur le dispositif d'entête de groupe au dispositif distant dans la liste d'éléments dispositifs pour chaque groupe de transfert, le dispositif d'en-tête de groupe de chaque groupe de transfert fonctionnant comme étant représentatif du groupe de transfert pour exécuter le processus de transfert.

2. Dispositif électronique selon la revendication 1, dans lequel le circuit de transmission-réception est configuré en outre de façon à recevoir, en provenance d'un ou de plusieurs dispositifs distants desservis par le dispositif électronique, des informations sur un dispositif relais désiré auquel le dispositif distant désire être transféré, et le circuit de traitement est configuré en outre de façon à déterminer le dispositif relais cible pour chaque groupe de transfert en se basant sur les informations sur le dispositif relais désiré pour chaque dispositif distant.

3. Dispositif électronique selon la revendication 2, dans lequel le circuit de traitement est configuré en outre de façon à regrouper le ou les dispositifs distants dans le ou les groupes de transfert en se basant sur les informations sur le dispositif relais désiré pour chaque dispositif distant.

4. Dispositif électronique selon la revendication 2, dans lequel le circuit de transmission-réception est configuré en outre de façon à transmettre les informations de demande de dispositif relais désiré à chaque dispositif distant du ou des dispositifs distants.

5. Dispositif électronique selon la revendication 4, dans lequel les informations de demande de dispositif relais désiré comprennent des informations de configuration de mesure pour identifier des informations de ressources temps-fréquence pour le dispositif distant mesurant le dispositif relais désiré, et
dans lequel le circuit de traitement est configuré en outre de façon à déterminer les informations de configuration de mesure en fonction des informations de puissance de batterie du dispositif distant.

6. Dispositif électronique (2500), comprenant un circuit de transmission-réception (2520) configuré de façon à recevoir une commande de transfert à relais basée sur groupe, cette commande de transfert à relais basée sur groupe comprenant des informations sur une liste d'éléments dispositifs et sur un dispositif relais cible pour un groupe de transfert dans lequel le dispositif électronique est situé afin de permettre le transfert d'un dispositif relais source au dispositif relais cible d'être exécuté sur des dispositifs dans la liste d'éléments dispositifs de chaque groupe de transfert dans son ensemble ;
le circuit de transmission-réception étant configuré en outre de façon à recevoir des informations sur un dispositif d'en-tête de groupe pour le groupe de transfert dans lequel le dispositif électronique est situé, le dispositif d'en-tête de groupe fonctionnant comme représentatif du groupe de transfert dans lequel le dispositif électronique est situé pour exécuter le processus de transfert.

7. Dispositif électronique selon la revendication 6, dans lequel le circuit de transmission-réception est configuré en outre de façon à transmettre des informations d'exigences d'établissement de connexion au dispositif relais cible pour le groupe de transfert dans lequel le dispositif électronique est situé, ces informations d'exigences d'établissement de connexion comprenant des informations sur un dispositif dans la liste d'éléments dispositifs pour le groupe de transfert dans lequel le dispositif électronique est situé, ou
dans lequel le circuit de transmission-réception est configuré en outre de façon à recevoir des informations de réponse d'établissement de connexion en provenance du dispositif relais cible pour le groupe de transfert dans lequel le dispositif électronique est situé, ces informations de réponse d'établissement de connexion représentant que le dispositif électronique est autorisé à accéder au dispositif relais cible, ou
dans lequel le dispositif électronique comprend en outre : un circuit de traitement configuré de façon à faire démarrer une minuterie, et à exécuter une opération de nouvelle sélection de relais lorsqu'aucune information de réponse d'établissement de connexion venant du dispositif relais cible pour le groupe de transfert dans lequel le dispositif électronique est situé n'est reçue avant l'expiration de la minuterie.
